# EUROPEAN PATENT SPECIFICATION

(11) **EP 3 862 210 B1**
(45) Date of publication and mention of the grant of the patent: **07.06.2023**
(21) Application number: 20156462.2
(22) Date of filing: 10.02.2020
(51) Int. Cl.: B60K 35/00

(54) **DISPLAY DEVICE WITH FUNCTIONAL ELEMENTS AND METHOD FOR PRODUCING SUCH A DISPLAY DEVICE**
ANZEIGEVORRICHTUNG MIT FUNKTIONSELEMENTEN UND VERFAHREN ZUR HERSTELLUNG EINER SOLCHEN ANZEIGEVORRICHTUNG
DISPOSITIF D'AFFICHAGE DOTÉ D'ÉLÉMENTS FONCTIONNELS ET PROCÉDÉ DE PRODUCTION D'UN TEL DISPOSITIF D'AFFICHAGE

(43) Date of publication of application: 11.08.2021
(73) Proprietor: Smart Coloring GmbH, 52074 Aachen (DE)
(72) Inventor: ROBERTZ, Bernd, 52074 Aachen (DE); VOS, Hendre, 52074 Aachen (DE)
(74) Representative: Michalski Hüttermann & Partner Patentanwälte mbB

(56) References cited:
- DE-A1-102005 011 180
- DE-A1-102013 223 247
- DE-A1-102015 011 413

## Description

The invention relates to a display device with functional elements. The invention further relates to a method for producing a display device with functional elements.

Display devices having functional elements which are illuminable by a light source that may be placed behind the display device are widely used in vehicles.

EP 1 034 965 B1 describes display units, having a display front, which is provided with signs having a transparent portion and a substantially opaque portion enclosed by the transparent portion, and which has a light source arranged behind the display front for illumination in the transmitted light method.

DE 10 2013 223247 A1 describes a display device for a vehicle comprising a translucent plastic film which has an opaque coating, wherein a symbol area for a symbol to be displayed by the display device is covered by the opaque coating is recessed, an opaque intermediate component which is applied to the opaque coating outside of the symbol area and surrounding the symbol area and forms a light space adjoining the symbol area, and a diffusing element which is applied to the opaque coating and the symbol area within the light space and is designed to convert light incident on the diffusing element into a diffuse light to illuminate the symbol area.

DE 10 2015 011413 A1 relates to an operating device of a motor vehicle with a component which has at least one illuminated symbol. The component has a light-transmissive and/or light-conducting base body with a front side that faces the outside of the operating device and a back side that faces an interior space of the operating device.

DE 10 2005 011180 A1 describes plastic moldings with two-dimensional or three-dimensional image structures produced on the inside by internal laser engraving. The plastic moldings consist of plastic materials containing nanoscale metal oxides with particle sizes of 1 to 500 nm, with both the plastic material and the metal oxide contained being transparent to the laser light used to generate the image structures.

The functional elements may be symbols that provide certain information content to the driver in specific situation, e.g. the refueling indicator. Hence there is the need that these functional elements should only be visible to the driver in the specific situation, e.g. if the fuel tank reaches a critical filling level. However, in cases when there are several functional elements on the display device there may be stray light contamination of neighboring functional elements. Hence, not only the functional element that shall be illuminated is visible for the user but also the neighboring functional element.

Furthermore, many car manufacturers manufacture their vehicles with full equipment independent of the specific model in the model range, as this is cheaper than equipping vehicles individually for each model in the model range. These equipment parts may be activated at a later date for a fee. In order for this to go unnoticed by the customer, light contamination of non-activated functional elements should be avoided.

In view of the aforementioned prior art, it is an object of the invention to provide means for reducing light scattering between separate arranged functional elements.

According to the invention a solution for this problem is achieved by a display device having the features of independent claim 1. Preferred embodiments are defined by the features of the dependent claims.

Furthermore, this object is solved by the method for producing the above display device having the features of independent claim 25. Preferred embodiments are defined by the features of the dependent claims.

Provided is a display device with illuminable functional elements comprising: at least one functional layer, at least one rear support layer, and at least one light barrier element, wherein the functional layer is next to the rear support layer, wherein an upper surface of the rear support layer is opposite to a lower surface of the rear support layer and contacts a lower surface of the functional layer, wherein the functional layer comprises at least two functional elements, that are light-transmissive for visible light and are illuminable by at least one light source, wherein the rear support layer is light-transmissive for visible light, the rear support layer comprises at least one light barrier element, wherein the light barrier element comprises a dye and is formed in the rear support layer, such that the dye is molecularly solved in the material of the rear support layer, wherein the light barrier element extends essentially vertically - i.e. with an angle of 90° +/- 50% - from the lower surface of the rear support layer into the rear support layer and is arranged between of at least two superposed functional elements of the superposed functional layer, wherein the light barrier element arrange in the rear support layer at least partly surrounds spaced apart at least one superposed functional element, and wherein the light barrier element is adapted for reducing or preventing light scattering through the light barrier element.

The light barrier element comprises the dye. The term "dye" means in the context of the invention a substance, preferably an organic substance, that is soluble in the material of the rear support layer. Accordingly, the dye-molecules primarily exists in the material of the rear support layer as molecularly solved dye-molecules. Preferably, at least more than 90% of the dye-molecules are molecularly solved in the material of the rear support layer. In contrast to dyes, pigments - organic or inorganic - would be present as finely distributed particles or agglomerates.

Furthermore, according to a preferred embodiment, the dye may have a molecular weight in the range of about ≥ 250 g/mol to about ≤ 1000 g/mol, preferably in the range of about ≥ 250 g/mol to about ≤ 550 g/mol. The dye may migrate into the rear support layer material forming the light barrier element.

According to one embodiment a display device with illuminable functional elements is provided comprising: at least one front layer, at least one functional layer, at least one rear support layer, and at least one light barrier element, wherein the functional layer is sandwiched between the front layer and the rear support layer, wherein an upper surface of the rear support layer is opposite to a lower surface of the rear support layer and contacts a lower surface of the functional layer, wherein an upper surface of the functional layer contacts a lower surface of the front layer, wherein the functional layer comprises at least two functional elements, that are light-transmissive for visible light and are illuminable by at least one light source, wherein the rear support layer is light-transmissive for visible light, wherein the rear support layer comprises at least one light barrier element, wherein the light barrier element comprises a dye and is formed in the rear support layer, such that the dye is molecularly solved in the material of the rear support layer, wherein the light barrier element extends essentially vertically from the lower surface of the rear support layer into the rear support layer and is arranged between of at least two superposed functional elements of the superposed functional layer, wherein the light barrier element arranged in the rear support layer at least partly surrounds spaced apart at least one superposed functional element, and wherein the light barrier element is adapted for reducing or preventing light scattering through the light barrier element.

According to one embodiment a display device with illuminable functional elements is provided comprising: at least one front layer, at least one functional layer, at least one rear support layer, and at least one light barrier element, wherein the functional layer is sandwiched between the front layer and the rear support layer, wherein an upper surface of the rear support layer is opposite to a lower surface of the rear support layer and contacts a lower surface of the functional layer, wherein an upper surface of the functional layer contacts a lower surface of the front layer, wherein the functional layer comprises at least two functional elements, that are light-transmissive for visible light and are illuminable by at least one light source, wherein the front layer is of a transparent material so that the illuminable functional elements are visible through the front layer for a user when illuminated, wherein the rear support layer is light-transmissive for visible light, wherein the rear support layer comprises at least one light barrier element, wherein the light barrier element comprises a dye and is formed in the rear support layer, such that the dye is molecularly solved in the material of the rear support layer, wherein the light barrier element extends essentially vertically from the lower surface of the rear support layer into the rear support layer and is arranged between of at least two superposed functional elements of the superposed functional layer, wherein the light barrier element arranged in the rear support layer at least partly surrounds spaced apart at least one superposed functional element, and wherein the light barrier element is adapted for reducing or preventing light scattering through the light barrier element.

According to another embodiment a display device with illuminable functional elements is provided comprising: at least one front layer, at least one functional layer, at least one rear support layer, and at least one light barrier element, wherein the functional layer is sandwiched between the front layer and the rear support layer, wherein an upper surface of the rear support layer is opposite to a lower surface of the rear support layer and contacts a lower surface of the functional layer, wherein an upper surface of the functional layer contacts a lower surface of the front layer, wherein the functional layer comprises at least two functional elements, that are light-transmissive for visible light and are illuminable by at least one light source, wherein the front layer is of a transparent material so that the illuminable functional elements are visible through the front layer for a user, wherein the rear support layer is light-transmissive for visible light, wherein the rear support layer comprises at least one light barrier element, wherein the light barrier element comprises a dye and is formed in the rear support layer, such that the dye is molecularly solved in the material of the rear support layer, wherein the light barrier element extends essentially vertically from the lower surface of the rear support layer into the rear support layer and is arranged between of at least two superposed functional elements of the superposed functional layer, wherein the light barrier element arranged in the rear support layer at least partly surrounds spaced apart the at least one superposed functional element, wherein the light barrier element comprises the dye having a molecular weight in the range of about ≥ 250 g/mol to about ≤ 1000 g/mol, and wherein the light barrier element is adapted for reducing or preventing light scattering through the light barrier element.

The main idea is to have a display device with several layers -functional layer, rear support layer, and optionally a front layer - and to have a light barrier element, which comprises the dye, in the rear support layer. The functional elements in the functional layer are light-transmissive for visible light and are illuminable by a light source. The functional elements and/or the functional layer may be colored. The term "functional element" means in the context of the invention a specific region of the functional layer that has a different light transmittance than the region of the functional layer surrounding the specific region of the functional layer. For example, the region of the functional layer surrounding the functional element may have a different color than the functional element. Hence, during day the functional elements are easily visible due to the color difference. At night the functional elements may be illuminated to provide visibility without glare. Alternatively, the functional elements may appear to the user to have the same color as the region of the functional layer surrounding the functional elements. In this case, during day the user may not be aware of the existence of the functional element. However, even though the functional element appears to the user to have the same color as the region surrounding the functional element, the light transmittance of the functional element is preferably different compared to the light transmittance of the region of the functional layer surrounding the functional element. Hence, after activation of the functional element or after activation of a feature symbolized by the functional element, the functional element may get visible to the user due to illumination of the functional element. For illumination of the functional elements a light source may be installed behind the display device. Furthermore, the rear support layer is transparent, semi-transparent, or translucent for visible light to facilitate the illumination of the functional elements.

Even though it may be often the case that - from a perspective of a user of the display device - that the functional layer is the foremost layer or in case there is a front layer that the front layer is the foremost layer and that the rear support layer is - from the perspective of the user - behind the functional layer or front layer, it is also possible that the rear support layer is the foremost layer, and the functional layer and optionally front layer are behind the rear support layer.

Furthermore, it may also be the case, that the display device comprises additional layers. Furthermore, the additional layers may have a light barrier element or may be without a light barrier element.

As already mentioned, the functional element is a specific region of the functional layer that has a different light transmittance than the region of the functional layer surrounding the specific region of the functional layer. The functional element may be generated by using different coloring agents for the specific region of the functional layer than for the rest of the functional layer. The functional element may have the form of a symbol or a letter to provide certain information content to the driver in specific situation, for example the form of a refueling indicator. Preferably, the functional element may have a higher light transmittance than the region of the functional layer surrounding the functional element. The functional element itself may also include several regions having higher and/or lower light transmittance than the region of the functional layer surrounding the functional element. More preferably, the region of the functional layer surrounding the functional element may have a light transmittance close to zero. In other words, the region of the functional layer surrounding the functional element may be optically dense.

The term "transparent" as well as "light-transmissive" means in the context of the invention that the rear support layer has at least a light transmittance for visible light that is ≥ 10 %, preferably ≥ 50% and more preferably ≥ 75%. Even more preferably, the rear support layer has at least a light transmittance for light with a wavelength between 380 nm to 750 nm that is ≥ 10%, preferably ≥ 50% and more preferably ≥ 75%. Moreover, in the context of the invention the term means that the front layer has at least a light transmittance for visible light that is ≥ 10%, preferably ≥ 50% and more preferably ≥ 75%. Even more preferably, the rear support layer has at least a light transmittance for light with a wavelength between 380 nm to 750 nm that is ≥ 10%, preferably ≥ 50% and more preferably ≥ 75%. To prevent or reduce stray light contamination of neighboring functional elements, the rear support layer comprises at least one light barrier element that is adapted for reducing or preventing light scattering through the light barrier element. Being adapted for reducing or preventing light scattering through the light barrier element may mean that the light barrier element absorbs or reflects light. In other words, the light barrier element is less light-transmissive than the rear support layer. Preferably, the light barrier element has a low transmittance of light through the light barrier. More preferably the light barrier element has a light transmittance for visible light that is ≤ 75%, preferably ≤ 10%. Even more preferably, the light barrier element has a light transmittance for light with a wavelength between 380 nm to 750 nm that that is ≤ 25%, preferably ≤ 10%.

Furthermore, a display device may be provided, wherein the light transmission in the range of 380 nm to 750 nm of the light barrier element is at least 2 times, preferably at least 100 times less compared with the light transmission in the range of 380 nm to 750 nm of the rear support layer, based on the same path length.

The light transmittance for visible light for the rear support layer, the front layer and the light barrier element may be determined according to the DIN 1349 (Transmisson of optical radiation; optical clear (nonscattering) media, quantities, symbols and units). Preferably, the transmittance of the front layer and the rear support layer is determined with UV-VIS spectroscopy across a path length of 1 cm of the rear support layer and/or the front layer. More preferably, the transmittance of the light barrier element is determined with UV-VIS spectroscopy across a path length of 1 mm of the light barrier element. Further preferably, the wavelength for determining the transmittance is 532 nm, more preferably the wavelength for determining the transmittance corresponds to the wavelength of the light source used to illuminate the functional element.

The light barrier element is formed in the rear support layer and arranged in the rear support layer, such that it extends essentially vertically from the lower surface of the rear support layer into the rear support layer. Essentially vertically may mean that the light barrier element extends parallel to a normal vector of the lower surface into the lower surface. Further, the light barrier element may extend more into the vertical direction as it extends into a direction perpendicular to the vertical direction. Further, the light barrier element may extend from the lower surface of the rear support layer into the rear support layer with an angle of 90° +/- 50%. Furthermore, the light barrier element may have a certain thickness orthogonal to its vertical extension. Preferably, the thickness of the light barrier element may be 1,1 to 10 times lower than a vertical extent of the light barrier element into rear support layer. The thickness of the light barrier element may be essentially constant, meaning it does vary for not more than +/- 25%. Alternatively, the thickness of the light barrier element may vary. For example, the thickness of the light barrier element near the upper surface of the rear support layer may be higher than the thickness of the light barrier element further away from the upper surface of the rear support layer or vice versa. Furthermore, the light barrier element is arranged between of at least two superposed functional elements of the superposed functional layer and the light barrier element at least partly surrounds spaced apart the at least one superposed functional element for effective prevention of stray light contamination. Therefore, the display device has no or significant reduced light scattering between the separate arranged and illuminable functional elements.

For example, when the display device is viewed from the perspective of a user sitting in front of the front layer, the light barrier element may completely or partially surround the functional element. The light barrier element may have the form of a straight line in between the two functional elements. The light barrier element may also have the form of a circle, semi-circle or segment of a circle. The light barrier element may also have the form of a "H", "U", "I", or "L". Any other forms are possible. It may be possible that every functional element is surrounded or partially surrounded by a light barrier element. It may also be possible that one light barrier element may be formed as a grid, and in some or all of the cells of the grid there may be a functional element. Therefore, the light barrier element may also have the function of a light guide.

If the display device is viewed from a perspective orthogonal to the perspective of the user, such that the layered structure of the display device is apparent, the light barrier element extends basically vertically into the rear support layer and is arranged between two superposed functional elements of the superposed functional layer. It may be possible that the light barrier element extends such far into the rear support layer that its vertical extent essentially corresponds to the thickness of the rear support layer. In other words, the light barrier element may reach through the rear support layer. It may also be possible that the vertical extent of the light barrier element is smaller than the thickness of the rear support layer. In this case the light barrier element extends essentially vertically from the lower surface of the rear support layer into the rear support layer and may end in the rear support layer.

According to a preferred embodiment the display device may comprise at least one light source, wherein the light source is arranged below the rear support layer and is positioned below at least one functional element, such that light emitted by the light source substantially illuminates the at least one functional element or wherein the display device comprises at least one light source, wherein the light source is arranged above the functional layer, and/or in case the display device comprises a front layer above the front layer, and is positioned above at least one functional element, such that light emitted by the light source substantially illuminates the at least one functional element. The light source may emit a beam of light that may be directed towards the functional element. Due to the light barrier element in the display device, light scattering to another functional element is prevented or reduced.

With respect to an effective reduction or prevention of stray light contamination of neighboring functional elements, the light barrier element may absorb light in a wavelength that essentially corresponds to a wavelength of the light emitted by the light source or the light barrier element may reflect light in a wavelength that essentially corresponds to a wavelength of the light emitted by the light source. In other words, there may be two ways to achieve an effective reduction or prevention of light scattering to another functional element. One possibility is to use a light barrier element that absorbs the light emitted by the light source. For example, a dyed light barrier element may be used. By using different dyes of the light barrier element, the wavelength range of light absorbed by the light barrier element may be adjusted to the wavelength range of the light emitted by the light source. Preferably a dark dye, for example black, may be used as dye for the light barrier element. More preferably a light barrier element with a high absorption cross section may be used. The light absorbed by the light barrier element may be dissipated to heat. Alternatively, the light absorbed by the light barrier element may be transformed into light with a different wavelength and emitted. Another possibility is to use a light barrier element that reflects the light emitted by the light source. In this case, compared to an absorptive light barrier element, a light source with a lower luminous intensity may be used, since essentially none of the light is absorbed by the light barrier. In this case, the light barrier element may have the function of a light guide. Preferably, a light barrier element with a high scattering cross section may be used. In both cases the light barrier element reduced or prevents light from traveling through the light barrier element i.e. the light barrier element may have a higher extinction cross section than the rear support layer.

According to the above a display device may be provided, wherein the light barrier element is less translucent than the rear support layer, and/or the light barrier element absorbs more light in a wavelength that essentially corresponds to a wavelength of the light emitted by the light source compared to the rear support layer, and/or the light barrier element reflects more light in a wavelength that essentially corresponds to a wavelength of the light emitted by the light source compared to the rear support layer.

It may also be possible that there is one light source or a view light sources arranged below the rear support layer or above the front layer and/or functional layer. However, according to a preferred embodiment, the display device may comprise a light source for each functional element. In other words, there may be several light sources, i.e. one light source for each functional element. This embodiment may have the advantage that each functional element may be illuminated individually. This may enhance the freedom of design.

With respect to the light source, the light source may be an LED or OLED light source. These light sources may be low maintenance, may have a high lifetime and low operating costs. Furthermore, LEDs or OLEDs may only produce little waste heat, may be produced in many different forms and layouts, and are inexpensive. They also provide the advantage that the light emitted by LEDs or OLEDs may be narrow-band, meaning that only a small wavelength range may be present. Therefore, the matching of the absorption or reflection spectrum of the light barrier element and the emission spectrum of the light source may be facilitated.

The different layer of the display device may have different thicknesses. According to a preferred embodiment the thickness of the front layer may be ≥ 25 µm to ≤ 40000 µm, preferably ≥ 50 µm to ≤ 10000 µm, and more preferably ≥ 250 µm to ≤ 500 µm.

In this regard the thickness of the functional layer may be ≥ 1 µm to ≤ 350 µm, preferably ≥ 5 µm to ≤ 200 µm, more preferably ≥ 20 µm to ≤ 100 µm.

Furthermore, the thickness of the rear support layer may be ≥ 25 µm to ≤ 40000 µm, preferably ≥ 50 µm to ≤ 20000 µm, more preferably in between ≥ 500 µm to ≤ 10000 µm.

In order to reduce stray light contamination of neighboring functional elements even further the display device may comprise a protrusion element, wherein the protrusion element extends out of the lower surface of the rear support layer and is arranged between of at least two superposed functional elements of the superposed functional layer. Preferably the protrusion element is arranged on the lower surface of the rear support layer and positioned on the light barrier element. When viewed from the user perspective the protrusion element may be formed according to the light barrier element. More preferably the protrusion element may be in between two neighbouring light sources. The protrusion element may be formed of a polymer material. Furthermore, the protrusion element may be formed by an optically dense material. Therefore, the protrusion element may have a higher extinction coefficient than the rear support layer.

Furthermore, a display device may be provided, wherein the thickness of the light barrier in the rear support layer is ≥ 1 µm to ≤ 10.000 µm, preferably ≥ 10 µm to ≤ 5.000 µm, more preferably in between ≥ 50 µm to ≤ 1.000 µm. These values may lead to a more efficient reduction of stray light contamination.

Furthermore, a display device may be provided, wherein the vertical extent of the light barrier element extending vertically into the rear support layer is in between 0,0025% to 100% of the thickness of the rear support layer, and/or ≥ 1 µm, preferably ≥ 100 µm, and more preferably ≥ 250 µm. These values may lead to a more efficient reduction of stray light contamination. Preferably, the thickness of the light barrier element may be 1,1 to 10 times lower than the vertical extent of the light barrier element into rear support layer.

The display device may be based on a plastic material. According to a preferred embodiment the front layer may comprise a front-layer-support-layer-polymer or mixtures thereof selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone and acrylonitrile butadiene styrene (ABS).

Preferably, the front layer may be of a light-transmissive material, which is translucent and/or transparent for visible light. Therefore, the functional layer and/or the functional elements may be visible through the front layer for the user. However, the front layer may still be colored. The front layer may comprise additional components in order to enhance the UV-stability, the scratch resistance, and/or other properties. Furthermore, the front layer may comprise filling material.

The front layer, which is light-transmissive, may be a plastic film used for film insert molding. The plastic film may be based on polycarbonate. Polycarbonates are a group of thermoplastic polymers. Polycarbonates may be strong and resistant and therefore, the front layer may protect the functional layer. Additionally, polycarbonates may be easily worked, molded, and thermoformed, therefore facilitating the production of the display device.

In a preferred embodiment the display device may comprises an anti-scratch layer on an upper surface of the front layer, on an upper surface of the functional layer or on the lower surface of the rear support layer. The anti-scratch layer may be a lacquer that enhances the lifetime of the display device and makes it more resistant to environmental impacts. Preferably, also the anti-scratch layer is transparent, semi-transparent, or translucent for visible light to allow the visibility of the functional elements for the user. However, it is still possible that the anti-scratch layer is colored. The anti-scratch layer may also be structured to achieve a certain haptic perception, and/or a certain visual appearance e.g. a gloss or haze. In this respect the anti-scratch layer may comprise an anti-scratch layer polymer or mixtures thereof selected from the group comprising acrylic resin, epoxy resins, and polyurethane. The anti-scratch layer polymer may also be cross-linked, or may be cross-linked by exposing the anti-scratch layer polymer to UV-light and/or heat.

According to a further embodiment the light barrier element and the rear support layer are a one-piece component. A one-piece component may indicate that the light barrier element and the rear support layer are not two separate components. Instead the display device is designed such that the rear support layer contains the light barrier element.

In this context and according to a further embodiment the light barrier element and/or the rear support layer may be based on a rear support layer material, wherein the rear support layer material comprises the front-layer-support-layer-polymer or mixtures thereof.

According to the above, a display device may be provided, wherein the light barrier element and the rear support layer are of the same material, with the exception that the light barrier element comprises in addition the dye, so that the transmittance of the light barrier element for light having a wavelength of 380 nm to 750 nm is less than the transmittance of the rear support layer for light having a wavelength of 380 nm to 750 nm.

Furthermore, the light barrier element and/or the rear support layer may comprise the front-layer-support-layer-polymer or mixtures thereof selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone and acrylonitrile butadiene styrene (ABS).

According to a further embodiment the functional layer and/or the functional elements may be based on a functional layer material, wherein the functional layer material comprises a coloring agent or mixtures thereof. As already mentioned, the functional element is a specific region in the functional layer having a different light transmittance than the functional layer surrounding this specific region. The functional layer and/or the functional element may be based on the functional layer material. The functional layer and/or the functional element may be produced by printing the functional layer material on the front layer and/or on the rear support layer. Preferably a screen-printing process or an intaglio (printmaking) process, inmold labeling (IML) process, inmold decoration (IMD) process, or hot stamping process is used. The functional layer material may comprise the coloring agent or mixtures of different coloring agents. The coloring agents may be based on polyurethane and may be selected from the group comprising Noriphan HRT N, Noriphan HTR N HF, NoriPET, and Noricryl, delivered by the company Pröll GmbH in Germany and/or coloring agents delivered by the company Teikoku Printing Inks Mfg. Co., Ltd in Japan. The coloring agent in the functional layer material is different from the dye in the light barrier element.

As already mentioned above the light barrier element and the rear support layer may be a one-piece component. Furthermore, it may be advantageous to produce the light barrier element by a colorization process of parts of the rear support layer leading to a migration of the dye into the rear support layer. There are various methods of coloring polar polymers such as polycarbonates and acrylonitrile-butadiene-styrene. However, these methods may not work, may not work efficiently, and/or are very slow for the generation of the light barrier element and/or these methods may not work, may not work efficiently, and/or are very slow for the colorization of non-polar polymers, such as polyethylene (PE) and polypropylene (PP) or for mixtures that contain a substantial part of a non-polar polymer.

Hence, according to the above, the rear support layer material may comprises at least 0.5 wt.-% of a front-layer-support-layer-polymer that has at least 5 wt.-% of heteroatoms based on the molecular weight of the front-layer-support-layer-polymer or mixtures thereof, wherein heteroatoms are any atoms except C and H atoms, or the rear support layer material may be based on a blend comprising ≥ 0.5 wt.-% of a polar-compound or mixtures thereof and < 99.5 wt.-% of the front-layer-support-layer-polymer or mixtures thereof, and wherein the polar-compound has at least 5 wt.-% of heteroatoms based on the molecular weight of the polar-compound, wherein heteroatoms are any atoms except C and H atoms.

Furthermore, the light barrier element may comprise the dye and at least 0.5 wt.-% of the front-layer-support-layer-polymer that has at least 5 wt.-% of heteroatoms based on the molecular weight of the front-layer-support-layer-polymer or mixtures thereof, wherein heteroatoms are any atoms except C and H atoms, or the light barrier element may comprise the dye and may be based on a blend comprising ≥ 0.5 wt.-% of a polar-compound or mixtures thereof and < 99.5 wt.-% of the front-layer-support-layer-polymer or mixtures thereof, and wherein the polar-compound has at least 5 wt.-% of heteroatoms based on the molecular weight of the polar-compound, wherein heteroatoms are any atoms except C and H atoms.

In order that the light barrier element may be formed, the rear support layer material may need to be polar. Therefore, it may comprise at least 0.5 wt.-% of the polar-compound. The polar-compound may be a synthetic polar-polymer, a synthetic polar-oligomer or a synthetic polar-additive. The synthetic polar-polymer preferably has an Mw about ≥ 1000 g/mol, the synthetic polar-oligomer preferably has an Mw about ≥ 600 g/mol and < 1000 g/mol and the synthetic polar-additive preferably has an Mw about ≥ 70 and < 600 g/mol. With regard to the polar-compound the polar-compound may have at least 5 wt.-% of heteroatoms based on the molecular weight of the polar-compound, wherein heteroatoms are any atoms except C and H atoms. Preferably the heteroatom is selected from the group comprising O, N, S, P, F, Cl, Br, and I. The polar-compound may be selected from the group comprising

### Synthetic polar-polymer or mixture

The synthetic polar-polymer or mixture thereof may be selected from the group comprising:
- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl( meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably α-methylstyrene and α-ethylstyrene, substituted styrenes polymers with an alkyl substituent on the ring, preferably vinyl toluene, and p-m ethyl styrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinyl pyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- aliphatic and/or aromatic polyesters, preferably, hydroxyl-functional dendritic polyesters, polycaprolactone, polyethylenterephthalate (PET), polyethylene naphthalate (PEN), polyethylene furanoate (PEF), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diol-terephthalate, polypentaspirogly-col-terephthalate (PSG), polycyclohexylenedimethylene-terephthalate (PCT), Polyethylenfuranoate (PEF), Polyethylennaphthylat, polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based co-polymer including a dicarboxylic acid-derived residue including a residue derived from an aromatic dicarboxylic acid and a diol-derived residue including a residue derived from 4,4-(oxybis(methylene)bis) cyclohexane methanol;
- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), polyamide, polyesterpolyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate-terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such NH₂-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other synthetic polar-polymer of amorphous copolyester, which can be used are known under the tradename Akestra 90, 100 and 110. The above named synthetic polar-polymers may be used alone or in a mixture of two or more.

With regard to hydroxyl-functional dendritic polyesters that can be suitable used as a polar polymer, these molecules may be produced using polyalcohol cores, hydroxy acids and technology based on captive materials. The dendritic structures may be formed by polymerization of the particular core and 2,2-dimethylol propionic acid (Bis-MPA). The base products that may be obtained are hydroxyl-functional dendritic polyesters. They may be fully aliphatic and may consist only of tertiary ester bonds. They may provide excellent thermal and chemical resistance. Extensive branching also improves reactivity, lowers viscosity and results in balanced mechanical properties. The hydroxyl-functional dendritic polyesters may be known under the trade name Boltorn^{®}. The following dendritic polymers may be used as non-limiting examples: Boltorn^{®} H20 16 terminal hydroxyl groups, nominal molecular weight of 1750 g/mol, Boltorn^{®} H2004 6 terminal hydroxyl groups, nominal molecular weight of 3100 g/mol, Boltorn^{®} H3 11 23 terminal hydroxyl groups, nominal molecular weight of 5300 g/mol, Boltorn^{®} P500 Formulated bimodal product with terminal hydroxyl groups, nominal molecular weight 1800 g/mol, Boltorn^{®} P1000 formulated bimodal product with terminal hydroxyl groups, nominal molecular weight 1500 g/mol, Boltorn^{®} U3000 modified with unsaturated fatty acid, nominal molecular weight 6500 g/mol, Boltorn^{®} W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

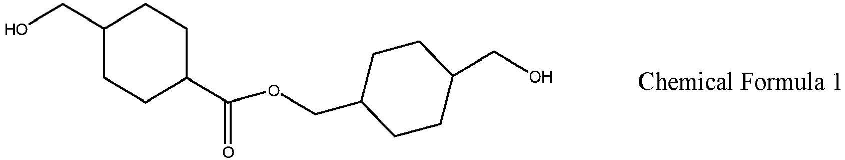

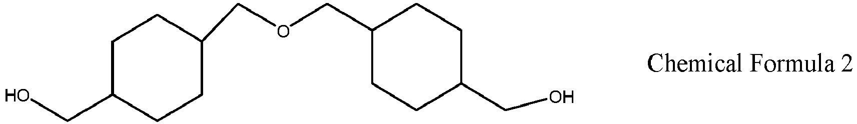

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The synthetic polar-polymer may also comprise the polyester based copolymers used in a mixture with polyethylene terephthalate (PET). The mixture may consist of 1 to 99 wt.-% of PET and 1 to 99 wt.-% of the polyester based copolymers, in order that both components add up to 100 wt.-%. Additionally, or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethyleneglycol moiety and at least one fatty acid moiety coupled to the polyethyleneglycol moiety. The polyethyleneglycol moiety may contain 10 to 25 ethyleneglycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinoleate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as polar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate, and polyoxyethylene (20) sorbitan monooleate, also known as Polysorbate 80 and E433.

### Synthetic polar-oligomer and mixtures thereof

With respect to the synthetic polar-oligomer and according to another embodiment the synthetic polar-oligomer or mixture thereof may be selected from the group comprising:
- oligoacrylate with methyl (oligomethylacrylate), ethyl (oligoethylacrylate), propyl (oligopropylacrylate), or butyl (oligobutylacrylate),
- oligomethacrylate with methyl (oligomethylmathacrylate), ethyl (oligoethylmethacrylate), propyl (oligopropylmethacrylate), or butyl (oligobutylmethacrylate),
- cooligomers of acrylic and methacrylic esters including, among others, tert. - Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates oligomers, preferably benzyl(meth)acrylate oligomers or phenyl(meth)acrylate oligomers, the aryl radicals each being unsubstituted or up to four times substituted;
- cycloalkyl(meth)acrylates oligomers, preferably 3-vinylcyclohexyl(meth)acrylate oligomers, bornyl (meth)acrylate oligomers;
- hydroxylalkyl (meth)acrylates oligomers, preferably 3- hydroxypropyl (meth)acrylate oligomers, 3,4- dihydroxybutyl(meth)acrylate oligomers, 2-hydroxyethyl(meth)acrylate oligomers, 2-hydroxypropyl(meth)acrylate oligomers;
- glycol di(meth)acrylates oligomers, preferably 1,4-butanediol (meth)acrylate oligomers;
- (meth)acrylates of ether alcohols oligomers, preferably tetrahydrofurfuryl (meth)acrylate oligomers, vinyloxyethoxyethyl(meth)acrylate oligomers;
- oligomers of amides and nitriles of the (meth)acrylic acid, preferably N-(3-dimethylaminopropyl)(meth)acrylamide oligomers, N-(diethylphosphono)(meth)acrylamide oligomers, 1-methacryloylamido-2-methyl-2-propanol oligomers;
- oligomers of sulfur-containing methacrylates, preferably ethylsulfinylethyl( meth)acrylate, 4-thiocyanatobutyl(meth)acrylate oligomers, ethylsulfonylethyl(meth)acrylate oligomers, thiocyanatomethyl(meth)acrylate oligomers, methylsulfinylmethyl(meth)acrylate oligomers, bis((meth)acryloyloxyethyl)sulfide oligomers;
- oligohydric (meth)acrylates, preferably trimethyloylpropanetri(meth)acrylate oligomers;
- acrylonitrile oligomers;
- vinyl ester oligomers, preferably vinyl acetate oligomers;
- styrene oligomers, substituted styrenes oligomers with an alkyl substituent in the side chain, preferably α-methylstyrene and α -ethylstyrene, substituted styrenes oligomers with an alkyl substituent on the ring, preferably vinyl toluene, and p-methylstyrene, halogenated styrene oligomers, preferably monochlorostyrene oligomers, dichlorostyrene oligomers, tribromostyrene oligomers and tetrabromostyrene oligomers;
- heterocyclic vinyl oligomers, preferably 2-vinylpyridine oligomers, 3-vinylpyridine oligomers, 2-methyl-5-vinylpyridine oligomers, 3-ethyl-4-vinylpyridine oligomers, 2,3-dimethyl-5-vinylpyridine oligomers, vinylpyrimidine oligomers, vinylpiperidine oligomers, 9-vinylcarbazole oligomers, 3-vinylcarbazole oligomers, 4-vinylcarbazole oligomers, 1-vinylimidazole oligomers, 2-methyl-1-vinylimidazole oligomers, N-vinylpyrrolidone oligomers, 2-vinylpyrrolidone oligomers, N-vinylpyrrolidine oligomers, 3-vinylpyrrolidine oligomers, N-vinylcaprolactam oligomers, N-vinylbutyrolactam oligomers, vinyl oxolane oligomers, vinyl furan oligomers, vinyl thiophene oligomers, vinylthiolane oligomers, vinylthiazoles and hydrogenated vinylthiazoles oligomers, vinyloxazoles and hydrogenated vinyloxazoles;
- oligomers of vinyl and isoprenyl ethers;
- maleic acid oligomers, preferably maleic anhydride oligomers, methyl maleic anhydride oligomers, maleimide oligomers, methyl maleimide; and
- cooligomers of ethylene and propylene with acrylic esters, preferably oligoethylen-block-co-oligomethylmethacrylat, oligopropylen-block-co-oligomethylmethacrylat;
- aliphatic and/or aromatic oligoesters, preferably oligocaprolactone, oligoethylentereph-thalate (PET), oligoethylene naphthalate (PEN), oligoethylene furanoate (PEF), oligotri-methylenterephthalat (PTT), oligobutylenterephthalat (PBT), glycolized oligoglycolter-ephthaltat (G-PET), amorphes oligoethylenterephthalat (A-PET), oligoesters of terephthalic acid, oligospiro-diol-terephthalate, oligopentaspiroglycol-terephthalate (PSG), polycyclohexylenedimethylene-terephthalate, Oligoethylenfuranoate (PEF), Oligoethylennaphthylat, oligoester based cooligomer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, oligester based cooligomer including a dicarboxylic acid-derived residue including a residue derived from an aromatic dicarboxylic acid and a diol-derived residue including a residue derived from 4,4-(oxybis(methylene)bis) cyclohexane methanol;
- oligocarbonate (PC), 2,2-Bis-(4-hydroxyphenyl)-propan (Bisphenol A) oligocarbonate, 2,2-Bis-(4-hydroxyphenyl)-butan (Bisphenol B) oligocarbonate, 1,1-Bis(4-hydroxyphenyl)cyclohexan (Bisphenol C) oligocarbonate, 2,2'-Methylendiphenol (Bisphenol F) oligocarbonate, 2,2-Bis(3,5-dibrom-4-hydroxyphenyl)propan (Tetrabrombisphenol A) oligocarbonate und 2,2-Bis(3,5-dimethyl-4-hydroxyphenyl)propan (Tetramethylbisphenol A) oligocarbonate, bisphenol S oligocarbonate, dihydroxydiphenylsulfid oligocarbonate, tetramethylbisphenol A oligocarbonate, 1,1-Bis(4-hydroxyphenyl)-3,3,5-trimethylcyclohexane (BPTMC) oligocarbonate, 1,1,1-Tris(4-hydroxyphenyl)-ethane (THPE) oligocarbonate;
- aliphatic oligoamide (PA), preferably PA 6 based on oligocaprolactam, PA 6.6 based on 6,6-hexamethylendiamin and adipic acid, PA 6.66 based on caprolactam, co-poymer of hexamethylendiamin and adipic acid, PA 66.610 based on hexamethylenediamine, cooligomer of adipic acid and sebaic acid, PA 4.6, PA10, PA 12 and PA cooligomers;
- oligourethane (PU),
- polar-cooligomere, maleic anhydride-olefin cooligomer;
- oligoalkylenoxide, oligoalkylene block cooligomer, propylenoxide-ethylenoxide cooligomer, (m)ethylene acrylate-maleic anhydride cooligomer;
- polar-teroligomere, preferably reactive teroligomers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), oligoamide, oligoester-oligoamides, or butyl (butyl(meth)acrylate), oligoether-oligoamide cooligomers;
- polar oligomer blends, preferably oligocarbonate/oligoethylenterephthalat blends (PC/PET blends), oligocarbonate/oligobutyleneterephthalate blends (PC/PBT blends), blends of oligocyclohexylene dimethylene terephthalate cooligomer, blends of oligo(butylene-adipate- terephthalate);
- oligoacrylnitril and oligoacrylnitril-cooligomers, preferably oligo acrylonitrile butadiene styrene (ABS), oligo styrene-acrylonitrile;
- oligostyrene and oligostyrene cooligomers, preferably styrene/butadiene co-oligomer (SBR), oligo styrene-isoprene-styrene (SIS), oligo(glycidyl methacrylate) grafted sulfonamide based oligostyrene resin with tertiary amine;
- ethylene-vinyl acetate;
- fatty acids as Montanic acid and esters based on fatty acids;
- oligoether, preferably oligoethyleneglycol, oligoethyleneglycol with at least one fatty acid coupled to the oligoethyleneglycol, oligoether with terminating functional groups, preferbyl NH₂-terminated oligoethers,
- functionalized oligoacrylamide oligomers, cooligomers and teroligomers, preferably oligo(2-acrylamido-2-aminopropionicacid) (oligoAMPA), oligo(2-acrylamido-2-amino propane sulfonic acid), oligo(N-isopropylacylamide (oligoPNIPAM); oligo (amidoamine-co-acrylic acid) co-oligomer, oligo(N,N-dimethylacrylamide-co-sodium acrylate), oligo(acrylamide-co-sodium acrylate)/oligo(ethylene glycol) semi-IPN, oligo(acrylamide-co-sodium 4-styrenesulfonate), oligo(acrylamide-co-sodium 4-styrenesulfonate)/oligo(ethylene glycol) semi-IPN, oligo(acrylamide-co-sodium methacrylate), oligo(acrylamide-co-sodium methacrylate)/oligo(ethylene glycol) semi-IPN, and/or oligo(N-isopropylacrylamide-co-acrylic acid) andoligo(acrylamide-co-acrylic acid;
- oligo(ether sulfones)/oligo(ethyleneimine) (PES/PEI);
- oligovinylpyrrolidone, preferably oligo(N-vinyl-2-pyrrolidone), oligo(N-vinyl-2-pyrrolidone-co-acrylonitrile) treated with hydroxylamine-hydrochloride
- oligovinyl alcohol;
- oligo(1-naphthylamine)-camphorsulphonic acid; and mixtures thereof.

With regard to the oligoester based cooligomers that can be suitable used as a polar oligomers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

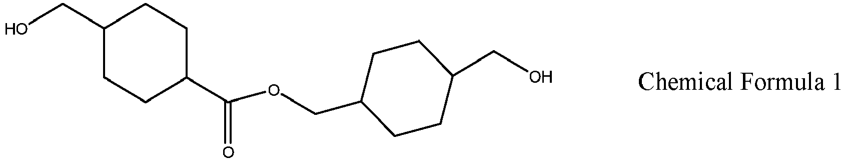

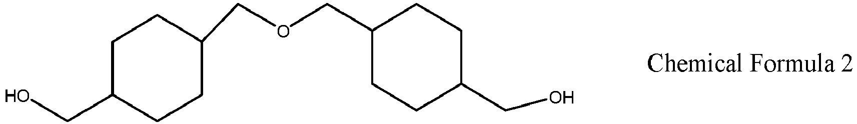

The compounds of chemical formula 1 and 2 can be cooligomerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the cooligomers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The synthetic polar-oligomer may also comprise the oligoester based cooligomers used in a mixture with oligoethylene terephthalate (PET). The mixture may consist of 1 to 99 wt.-% of PET and 1 to 99 wt.-% of the oligoester based cooligomers, in order that both components add up to 100 wt.-%. Additionally or alternatively, the compounds according to chemical formulas 1 and 2 may be used as co-monomers together with a further diol-component, e.g. ethylene glycol, in the preparation of the oligoester based cooligomers.

The oligoester based cooligomer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a oligocondensation reaction. In this case, other diols such as 1,4-cyclohexane dimethanol, ethylene glycol, diethylene glycol, or the like, as described above may be further reacted, such that a oligoester based cooligomer further including other diol-derived residues may be prepared.

With regard to the oligoether these may comprise but not limited to compounds that contains at least one oligoethyleneglycol moiety and at least one fatty acid moiety coupled to the oligoethyleneglycol moiety. The oligoethyleneglycol moiety may contain 8 or 9 ethyleneglycol repeating units.

The fatty acid moieties may be saturated or unsaturated and may contain 10 to 30 carbon atoms, preferably 16 to 22 carbon atoms.

Examples of these fatty acid moieties are oleate, laureate, stearate, palmitate and ricinoleate. Examples of compound that contain at least one polyethyleneglycol moiety and at least one fatty acid moiety coupled to the polyethyleneglycol moiety include PEG 300 di-oleate, PEG 300-distearate, PEG 400 dioleate, PEG 400 distearate, PEG 400 monooleate, PEG 400 monoricinoleate, PEG 400 monostearate.

A specific preferred example may be ethoxylated sorbitan oligoester. The ethoxylated sorbitan oligoester comprises a sorbitan group which is substituted by four oligoethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four oligoethylene glycol substituents and wherein the ester comprises between 18 and 22 ethylene glycol repeating units and wherein three of the ethylene glycol substituents are connected to oleate, laurate or stearate groups.

### Synthetic polar-additive and mixtures thereof

The synthetic polar-additive may be solid at 23 °C. The synthetic polar-additive may not be the dye. The synthetic polar-additive may be solid at 23 °C and is not the dye.

In connection to the synthetic polar-additive and according to an another embodiment the synthetic polar-additive having a Mw about ≥ 70 and < 600 g/mol may be selected from the group comprising aliphatic acids CH₃-[CH₂]ₙ-COOH acids (n about ≥ 3), amino acids, carboxylic acid amide, hydroxyl acids, fatty acids, aliphatic or aliphatic/aromatic aldehydes and ketones, esters, pentaerythritol, pentaerythritol dimers, pentaerythritol trimers, pentaerythritol ester preferably carboxylic acid ester, benzoic acid esters comprising benzylbenzoat or phenylbenzoat, phenylether, alcohols and polyvalent alcohols, preferably glycerine, amines, wherein the polar-additive is selected different the dye having a molecular weight Mw in the range of about ≥ 250 g/mol to about ≤ 550 g/mol; and preferably the polar-additive having a Mw about ≥ 100 and < 600 g/mol is containing a heteroatom selected from N, O, S and/or halogene. Preferably, halogens may be selected from the group comprising Cl, Br and I.

The carboxylic acid amide may comprise a compound according to formula C₂H₄(NHC(O)R³)₂, wherein R³ is a fatty acid moiety comprising 10-17 carbon atoms. The fatty acid moieties may be saturated or unsaturated. When the amount of carboxylic acid amide is too high the colored polar-polymer material may show blooming. Blooming i.e. discolorations may be caused by phase separation of the material's components. It may be caused by incompatibilities of the polar-additive with the polar-polymer and/or with the polar-polymer material.

Pentaerythritol may comprise a compound according to formula C(CH₂OR)₄, wherein R may be H, or wherein R may be a fatty acid moiety comprising 5-8 carbon atoms. The fatty acid moieties can be saturated or unsaturated. R may be also another moiety like ether, amide and/or urethane. As Pentaerythritol Perstorp Charmor PM 40 may be used.

Furthermore, the synthetic polar-additive may be an ether. Ether these may comprise but not limited to compounds that contains at least one ethyleneglycol moiety and at least one fatty acid moiety coupled to the ethyleneglycol moiety.

Examples of compound that contains at least one ethyleneglycol moiety and at least one fatty acid moiety coupled to the polyethyleneglycol moiety include PEG 300-monostearate, PEG 400 monolaurate.

The carboxylic acid ester may comprise a compound according to the following chemical formula 3: 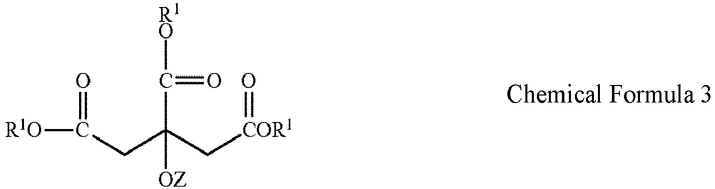 wherein R¹ is an alkyl group comprising 1-20 carbon atoms and Z is hydrogen or a group according to the formula C(O)R², wherein R² is an alkyl group comprising 1-20 carbon atoms. R¹ may be the same or different and is an alkyl group comprising 1-20 carbon atoms, preferably 1-15 carbon atoms, more preferably 1-10 carbon atoms. R² is an alkyl group comprising 1-20 carbon atoms, preferably 1-10 carbon atoms, more preferably 1-5 carbon atoms. Non-limiting examples of the carboxylic acid ester are triethylcitrate, tributylcitrate, trihexylcitrate, acetyltributylcitrate (ATBC; R¹ = C₄H₉, Z = CH₃CO), propanoyltributylcitrate, acetyltrihexylcitrate and butanoyltriethylcitrate.

Furthermore, as synthetic polar-additive 4-(hydroxymethyl)cyclohexylmethyl-4'-(hydroxymethyl)cyclohexane carboxylate represented by the chemical formula 1, 4,4-(oxybis(methylene)bis) cyclohexane methanol represented by the chemical formula 2, and mixtures thereof may be used:

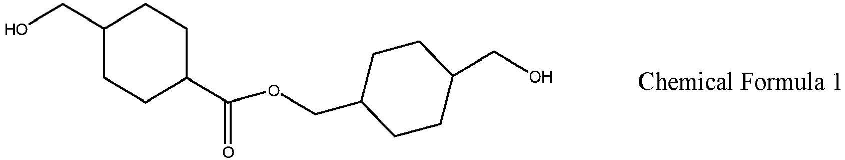

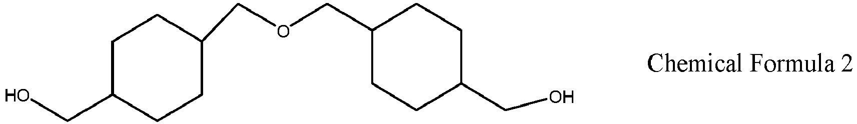

Furthermore, the light barrier element comprises the dye. Preferably the dye may have a molecular weight in the range of about ≥ 250 g/mol to about ≤ 1000 g/mol, preferably in the range of about ≥ 250 g/mol to about ≤ 550 g/mol. The dye may migrate into the rear support layer material forming the light barrier element. The dye preferably has a rather planar structure and preferably comprises at least one free rotation center outside the planar structure. Further in case of ligands and/or remnants which may be spatially or sterically demanding, the ligands and/or remnants may be as freely movable as possible around a center of rotation. Preferably the dye may not comprise a spiro-center and/or the dye may not comprise a large moiety that is rotation-impaired. In this context a large moiety that is rotation impaired may mean that the molecular weight of this rotation impaired moiety is about 350 g/mol +/- 10%.

Furthermore, according to a preferred embodiment a display device may be provided, wherein the light barrier element comprises the dye in a concentration of about ≥ 0,0001 wt.-% to ≤ 5 wt.-%, based on the total weight of the light barrier element. This leads to a more efficient reduction of stray light contamination.

The dye may comprise at least 2 to 6 aromatic six-membered rings, or at least 3 to 5 aromatic six-membered rings and at least 1 to 4 five-membered rings. Furthermore, the dye may have at least 2 to 6 aromatic six-membered rings and/or the dye may comprise at least on heteroatom selected from N, O, S, Br.

Preferably the dye is selected from the group comprising the following chemical formulas A1 to A10 according to table 1:

**Table 1**

| | |
|---|---|
| Chemical formula A1 | 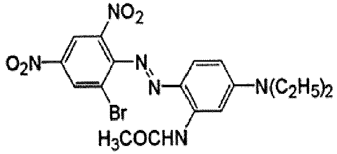 |
| Chemical formula A2 | 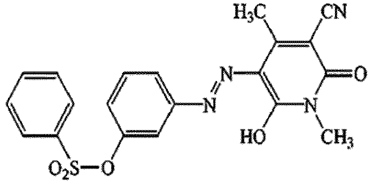 |
| Chemical formula A3 | 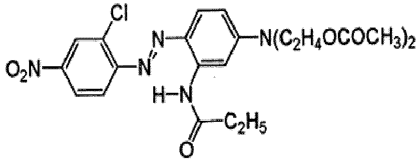 |
| Chemical formula A4 | 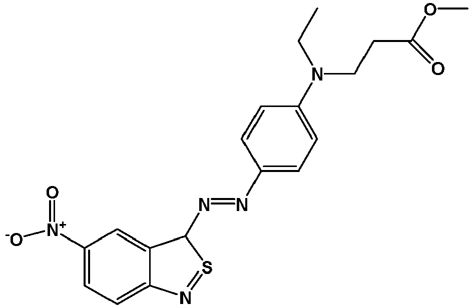 |
| Chemical formula A5 | 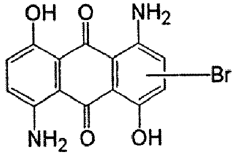 |
| Chemical formula A6 | 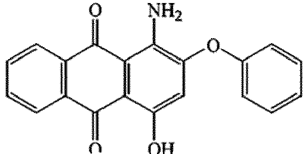 |
| Chemical formula A7 | 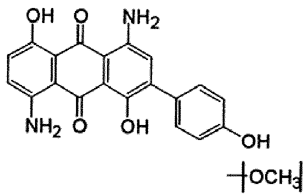 |
| Chemical formula A8 | 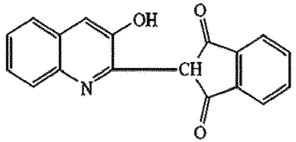 |
| Chemical formula A9 | 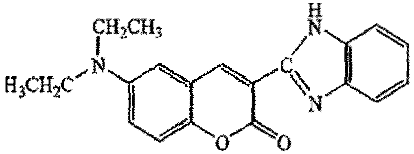 |
| Chemical formula A10 | 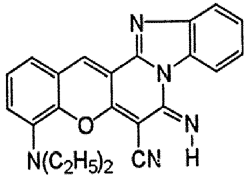 |

Regarding the chemical formula A7, the methoxy group -[OCH₃] may be an alternative for the hydroxyl group -[OH] on the aromatic moiety, that is not part of the anthraquinone ring system.

Preferably the dye is selected from the group comprising the coloring agents known under the trademark BEMACRON S/SE/E from CHT Germany GmbH, or from Dystar Pte Ltd. Preferably the dye is selected from the group comprising BEMACRON Yellow S-6GF, BEMACRON Yellow S-4g, BEMACRON Yellow Brown S-2RF1, BEMACRON Orange S-g, BEMACRON Scarlet S-gFl, BEMACRON Scarlet S-BWF1, BEMACRON Rubine S-2GFL, BEMACRON Violet S-3Rl, BEMACRON Violet S-BlF, BEMACRON Blue S-Bgl, BEMACRON Blue S-BB, BEMACRON Turquoise S-gF, BEMACRON Navy S-2gl, BEMACRON Navy S-31, BEMACRON Black S-31, BEMACRON Black S-T, BEMACRON Yellow SE-Rdl, BEMACRON Yellow SE-IF, BEMACRON Orange SE-Rdl, BEMACRON Red SE-4g, BEMACRON Pink SE-REl, BEMACRON Red SE-3B, BEMACRON Red SE-Rdl, BEMACRON Blue SE-lF, BEMACRON Blue SE-Rdl, BEMACRON Navy SE-R1X, BEMACRON Black SE-RIX, BEMACRON Black SE-Rd2R, BEMACRON Yellow E-3gl, BEMACRON Red E-FBl, BEMACRON Blue E-FB1, and BEMACRON Black E-R.

More preferably the dye is selected from the group comprising BEMACRON Black E-R, BEMACRON Yellow S-6GF, BEMACRON Rubine S-2GFL, BEMACRON Blue RS, BEMACRON Blue E-FBL 150, BEMACRON Red E-FBL, BEMACRON Blue S-BGL, BEMACRON Yellow E-3gl, BEMACRON Lumin. Yellow SEL-8G, and BEMACRON Lumin. Red SEL-G.

Furthermore, the dye may be selected from the group comprising polymethine dyes. Preferably, the polymethine dyes from the companies BÜFA GmbH & Co. KG, BLTFA Chemikalien GmbH & Co. KG, BÜFA Composite Systems GmbH & Co. KG, and/or BÜFA Reinigunssysteme GmbH & Co. KG may be used.
With regard to further advantages and technical features of the display device it is referred to the method for producing a display device, the examples and the further description.

The present invention further relates to the method for producing the above described display device, comprising the steps of
a) providing a blank display device, wherein the blank display device comprises
   at least one functional layer, and
   at least one rear support layer,
      wherein the functional layer is next to the rear support layer,
      wherein an upper surface of the rear support layer is opposite to a lower surface of
   the rear support layer and contacts a lower surface of the functional layer,
      wherein the functional layer comprises at least two functional elements, that are
   light-transmissive for visible light and are illuminable by at least one light source,
      wherein the rear support layer is light-transmissive for visible light,
b) producing at least one light barrier element into the rear support layer with a dye, such that the dye is molecularly solved in the material of the rear support layer and such that the light barrier element extends essentially vertically- i.e. with an angle of 90° +/- 50% - from the lower surface of the rear support layer into the rear support layer and is arranged between of at least two superposed functional elements of the superposed functional layer, and such that the light barrier element arranged in the rear support layer at least partly surrounds spaced apart at least one superposed functional element. The method basically comprises two steps, i.e. providing the blank display device and producing the light barrier element. The blank display device preferably is a display device that comprises all parts except for the light barrier element, the protrusion element and the light source. The blank display device may be produced by a standard production method.

With regard to the first processing step - providing the blank display device - the blank display device may be produced by film insert molding, in-mold decoration, in-mold labelling, lamination, over-molding, multi-material injection molding and/or a stacking process of the layers. Any other standard process known for producing the blank display device may be used.

The invention will further be described without limiting effect by reference to the attached drawings, wherein the figures show:
- Fig.1: a schematic view of a display device, according to prior art,
- Fig.2: two schematics views from different perspectives of the display device according to a preferred embodiment of the invention, and
- Fig.3: a flowchart showing the steps of a method for producing the display device, according to a preferred embodiment of the invention.

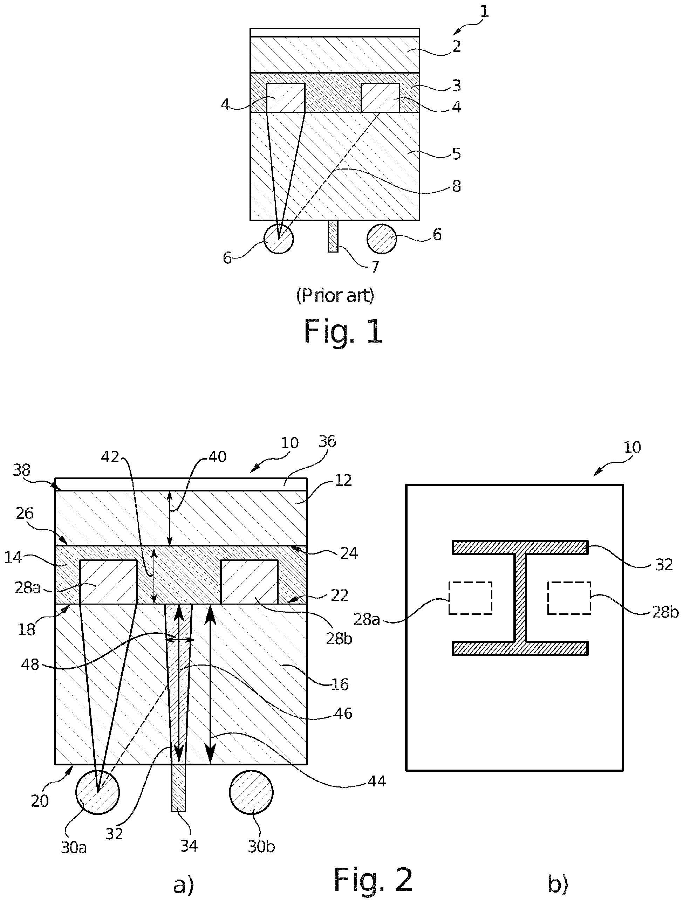

Figure 1 shows a schematic view of a display device 1 known in prior art. The display device according to prior art has a layered structure with a front layer 2, a functional layer 3 having two functional elements 4, and a rear support layer 5. The functional elements 4 in the functional layer 3 are transparent for visible light and are illuminable by a light source 6. There are two light sources 6, one for each functional element 4. The display device 1 further has a protrusion element 7 between the two light sources 6. However, despite of the protrusion element 7 there is stray light contamination 8 of the neighboring functional element 4 by the light source 6.

Figure 2 shows two schematic views of a display device 10 according to a preferred embodiment. The display device 10 according to the preferred embodiment has a layered structure as is visible from figure 2a). The display device 10 has a front layer 12, a functional layer 14, and a rear support layer 16. Figure 2b) shows the display device 10 viewed onto the rear support layer 16. As can be seen in figure 2a) the functional layer 14 is sandwiched between the front layer 12 and the rear support layer 16. An upper surface 18 of the rear support layer 16 is opposite to a lower surface 20 of the rear support layer 16 and contacts a lower surface 22 of the functional layer 14. An upper surface 24 of the functional layer 14 contacts a lower surface 26 of the front layer 12. The functional layer 14 comprises at least two functional elements 28a, 28b. The functional layer is based on the functional layer material. In this embodiment the functional layer material comprises the coloring agent piano black and red. The functional elements 28a, 28b in the functional layer 14 are transparent for visible light and are illuminable by a light source 30. The functional elements 28a, 28b are formed by the coloring agent red. There are two light sources 30a 30b, one for each functional element 28a, 28b. The functional elements 28a 28b have a night and day marking, meaning that the functional elements 28a 28b are not visible to the user as long as the functional elements 28a 28b are not illuminated. However, the functional elements 28a 28b become visible to the user when illuminated by the light sources 30a 30b. The light sources 30a 30b are installed behind the display device 10. The rear support layer 16 is transparent for visible light to facilitate the illumination of the functional elements 28. Furthermore, the rear support layer 16 of the display device 10 comprises at least one light barrier element 32. The rear support layer 16 and the light barrier element 32 are provided as one-piece component. The light barrier element 32 is adapted for reducing or preventing light scattering through the light barrier element 32. The light barrier element 32 is arranged in the rear support layer 16, such that it extends essentially vertically from the lower surface 20 of the rear support layer 16 into the rear support layer 16. Furthermore, the light barrier element 32 is arranged between the two superposed functional elements 28a, 28b of the superposed functional layer 14, as can easily be seen from the perspective in figure 2a). In this preferred embodiment the light barrier element 32 extends such far into the rear support layer 16 that its vertical extent essentially corresponds to the thickness of the rear support layer 16. Furthermore, the light barrier element 32 at least partly surrounds spaced apart at least one superposed functional element 28a, 28b for effective prevention of stray light contamination. When the display device 10 is viewed from the perspective of figure 2b), the light barrier element 32 partially surrounds the functional elements 28a, 28b. From the perspective in Figure 2b) the light barrier element 32 has the form of a "H".

In this preferred embodiment the two light sources 30a and 30b are OLED light source. The light emitted by the OLEDs is narrow-banded and corresponds to an absorption spectrum of the light barrier element 32.

In order to further reduce stray light contamination of neighboring functional elements 28a, 28b in this embodiment the display device 10 also comprise a protrusion element 34. The protrusion element 34 extends out of the lower surface 20 of the rear support layer 16 and is arranged between the two superposed functional elements 28a, 28b of the superposed functional layer 14. In this embodiment the protrusion element 34 is arranged on the lower surface 20 of the rear support layer 16 and positioned on the light barrier element 32. Furthermore, the protrusion element 36 is in between the two light sources 30a, 30b.

The display device 10 also comprises an anti-scratch layer 36 on an upper surface 38 of the front layer 12. The anti-scratch layer 36 is transparent for visible light to allow the visibility of the functional elements 28a, 28b for the user.

The front layer 12 of the display device 10 is also transparent. In this embodiment it comprises polycarbonate (PC). Furthermore, the rear support layer 16 comprises a mixture of polycarbonate (PC) and acrylonitrile butadiene styrene (ABS).

In the preferred embodiment in figure 2, the front layer 12 has a thickness 40 of 300 µm, the functional layer 14 has a thickness 42 of 250 µm, the rear support layer 16 has a thickness 44 of 2000 µm. Furthermore, a vertical extent 46 of the light barrier element 32 corresponds to the thickness 44 of the rear support layer. A thickness 48 of the light barrier element 32 varies between 200 µm and 800 µm.

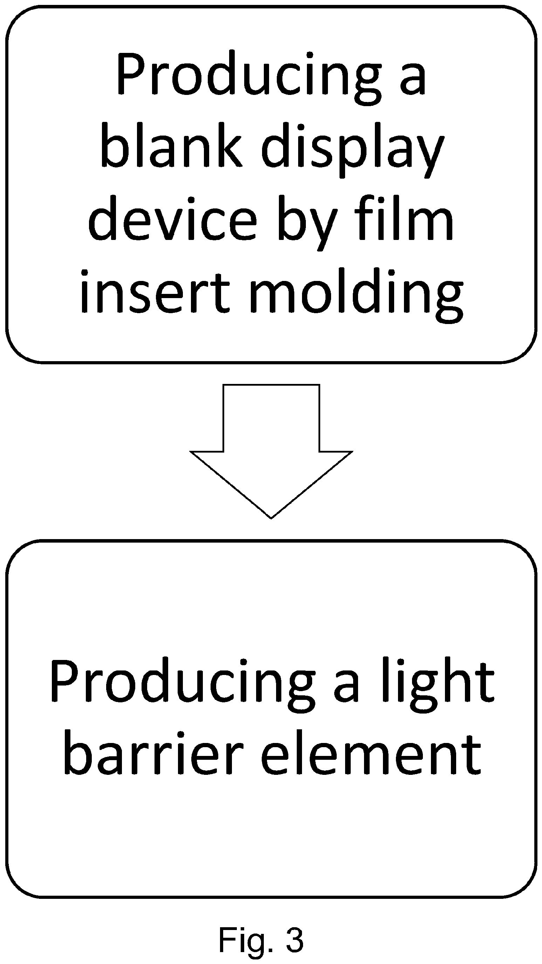

Figure 3 shows a flow chart of the method for producing the above display device. In a first step, a blank display device is produced. The blank display device comprises all the parts of the display device 10 shown in figure 2 except for the light barrier element 32, the protrusion element 34 and the light source 30. The blank display device is similar to the display device 1 known from prior art and shown in figure 1, without the protrusion element 7 and the light source 6. The blank display device may be produced by film insert molding. In a second step of the method the light barrier element 32 is formed.

**REFERENCE NUMERALS**

| | |
|---|---|
| display device (prior art) | 1 |
| front layer (prior art) | 2 |
| functional layer (prior art) | 3 |
| functional element (prior art) | 4 |
| rear support layer (prior art) | 5 |
| light source (prior art) | 6 |
| protrusion element (prior art) | 7 |
| display device | 10 |
| front layer | 12 |
| functional layer | 14 |
| rear support layer | 16 |
| upper surface of rear support layer | 18 |
| lower surface of rear support layer | 20 |
| lower surface of functional layer | 22 |
| upper surface of functional layer | 24 |
| lower surface of front layer | 26 |
| functional element | 28 |
| light source | 30 |
| light barrier element | 32 |
| protrusion element | 34 |
| anti-scratch layer | 36 |
| upper surface of front layer | 38 |
| thickness of front layer | 40 |
| thickness of functional layer | 42 |
| thickness of rear support layer | 44 |
| vertical extent of light barrier element | 46 |
| thickness of light barrier element | 48 |

## Claims

1. Display device (10) with illuminable functional elements (28), comprising:
at least one functional layer (14),
at least one rear support layer (16), and
at least one light barrier element (32),
wherein the functional layer (14) is next to the rear support layer (16),
wherein an upper surface (18) of the rear support layer (16) is opposite to a lower surface (20) of the rear support layer (16) and contacts a lower surface (22) of the functional layer (14),
wherein the functional layer (14) comprises at least two functional elements (28a, 28b), that are light-transmissive for visible light and are illuminable by at least one light source (30),
wherein the rear support layer (16) is light-transmissive for visible light,
wherein the rear support layer (16) comprises at least one light barrier element (32), wherein the light barrier element (32) extends essentially vertically from the lower surface (20) of the rear support layer (16) into the rear support layer (16) and is arranged between of at least two superposed functional elements (28a, 28b) of the superposed functional layer (14),
wherein the light barrier element (32) arranged in the rear support layer (16) at least partly surrounds spaced apart at least one superposed functional element (28), and
wherein the light barrier element (32) is adapted for reducing or preventing light scattering through the light barrier element (32),
**characterized in that**
the light barrier element (32) comprises a dye and is formed in the rear support layer (16), such that the dye is molecularly solved in the material of the rear support layer.

2. Display device (10) according to claim 1, wherein the display device (10) comprises at least one front layer (12),
wherein the functional layer (14) is sandwiched between the front layer (12) and the rear support layer (16), and
wherein an upper surface (24) of the functional layer (14) contacts a lower surface (26) of the front layer (12).

3. Display device (10) according to claim 1 or 2, wherein the display device (10) comprises at least one light source (30), wherein the light source (30) is arranged below the rear support layer (16) and is positioned below at least one functional element (28), such that light emitted by the light source (30) substantially illuminates the at least one functional element (28) or wherein the display device (10) comprises at least one light source (30), wherein the light source (30) is arranged above the functional layer (14), and/or in case the display device (10) comprise a front layer (12) above the front layer (12), and is positioned above at least one functional element (28), such that light emitted by the light source (30) substantially illuminates the at least one functional element (28).

4. Display device (10) according to any one of the preceding claims, wherein the light barrier element (32) is less translucent than the rear support layer (16), and/or the light barrier element (32) absorbs more light in a wavelength that essentially corresponds to a wavelength of the light emitted by the light source (30) compared to the rear support layer (16), and/or the light barrier element (32) reflects more light in a wavelength that essentially corresponds to a wavelength of the light emitted by the light source (30) compared to the rear support layer (16).

5. Display device (10) according to any one of the preceding claims, wherein the light transmission in the range of 380 nm to 750 nm of the light barrier element (32) is at least 2 times, preferably at least 100 times, less compared with the light transmission in the range of 380 nm to 750 nm of the rear support layer (16), based on the same path length.

6. Display device (10) according to any one of the preceding claims, wherein the display device (10) comprises a light source (30a, 30b) for each functional element (28a, 28b).

7. Display device (10) according to any one of claims 3 to 6, wherein the light source (30) is an LED or OLED light source.

8. Display device (10) according to any one of claims 2 to 7, wherein a thickness (40) of the front layer (12) is ≥ 25 µm to ≤ 40000 µm, preferably ≥ 50 µm to ≤ 10000 µm, more preferably ≥ 250 µm to ≤ 500 µm.

9. Display device (10) according to any one of the preceding claims, wherein a thickness (42) of the functional layer (14) is ≥ 1 µm to ≤ 350 µm, preferably ≥ 5 µm to ≤ 200 µm, more preferably ≥ 20 µm to ≤ 100 µm.

10. Display device (10) according to any one of the preceding claims, wherein a thickness (44) of the rear support layer (16) is ≥ 25 µm to ≤ 40000 µm, preferably ≥ 50 µm to ≤ 20000 µm, more preferably in between ≥ 500 µm to ≤ 10000 µm.

11. Display device (10) according to any one of the preceding claims, wherein a vertical extent (46) of the light barrier element (32) extending vertically into the rear support layer (16) is in between 0,0025% to 100% of the thickness of the rear support layer (16), and/or ≥ 1 µm, preferably ≥ 100 µm, and more preferably ≥ 250 µm.

12. Display device (10) according to any one of the preceding claims, wherein a thickness (48) of the light barrier element (32) in the rear support layer (16) is ≥ 1 µm to ≤ 10.000 µm, preferably ≥ 10 µm to ≤ 5.000 µm, more preferably in between ≥ 50 µm to ≤ 1.000 µm.

13. Display device (10) according to any one of the preceding claims, wherein the display device (10) comprises a protrusion element (34), wherein the protrusion element (34) extends out of the lower surface (20) of the rear support layer (16) and is arranged between of at least two superposed functional elements (28a, 28b) of the superposed functional layer (14).

14. Display device (10) according to any one of claims 2 to 13, wherein the front layer (12) comprises a front-layer-support-layer-polymer or mixtures thereof selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone and acrylonitrile butadiene styrene (ABS).

15. Display device (10) according to any one of the preceding claims, wherein the display device (10) comprises an anti-scratch layer (36) on an upper surface (38) of the front layer (12), on an upper surface of the functional layer or on the lower surface (20) of the rear support layer (16).

16. Display device (10) according to claim 15, wherein the anti-scratch layer (36) comprises an anti-scratch layer polymer or mixtures thereof selected from the group comprising acrylic resin, epoxy resins, and polyurethane.

17. Display device (10) according to any one of the preceding claims, wherein the light barrier element (32) and the rear support layer (16) are a one-piece component.

18. Display device (10) according to any one of the preceding claims, wherein the light barrier element (32) and the rear support layer (16) are of the same material, with the exception that the light barrier element (32) comprises in addition the dye, so that the transmittance of the light barrier element (32) for light having a wavelength of 380 nm to 750 nm is less than the transmittance of the rear support layer (16) for light having a wavelength of 380 nm to 750 nm.

19. Display device (10) according to any one of the preceding claims, wherein the light barrier element (32) and/or the rear support layer (16) is based on a rear support layer material, wherein the rear support layer material comprises a front-layer-support-layer-polymer or mixtures thereof, selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS).

20. Display device (10) according to any one of the preceding claims, wherein the functional layer and/or the functional elements are based on a functional layer material, wherein the functional layer material comprises a coloring agent or mixtures thereof.

21. Display device (10) according to claim 19, wherein the rear support layer material comprises at least 0.5 wt.-% of a front-layer-support-layer-polymer that has at least 5 wt.-% of heteroatoms based on the molecular weight of the front-layer-support-layer-polymer or mixtures thereof, wherein heteroatoms are any atoms except C and H atoms,
or
the rear support layer material is based on a blend comprising ≥ 0.5 wt.-% of a polar-compound or mixtures thereof and < 99.5 wt.-% of the front-layer-support-layer-polymer or mixtures thereof, and wherein the polar-compound has at least 5 wt.-% of heteroatoms based on the molecular weight of the polar-compound, wherein heteroatoms are any atoms except C and H atoms.

22. Display device (10) according to any one of the preceding claims, wherein the light barrier element (32) comprises the dye and at least 0.5 wt.-% of a front-layer-support-layer-polymer that has at least 5 wt.-% of heteroatoms based on the molecular weight of the front-layer-support-layer-polymer or mixtures thereof, wherein heteroatoms are any atoms except C and H atoms,
or
the light barrier element (32) comprises the dye and is based on a blend comprising ≥ 0.5 wt.-% of a polar-compound or mixtures thereof and < 99.5 wt.-% of the front-layer-support-layer-polymer or mixtures thereof, and wherein the polar-compound has at least 5 wt.-% of heteroatoms based on the molecular weight of the polar-compound, wherein heteroatoms are any atoms except C and H atoms.

23. Display device (10) according to any one of the preceding claims, wherein the light barrier element (32) comprises the dye having a molecular weight in the range of about ≥ 250 g/mol to about ≤ 550 g/mol.

24. Display device (10) according to any one of the preceding claims, wherein the light barrier element (32) comprises the dye in a concentration of about ≥ 0,0001 wt.-% to ≤ 5 wt.-%, based on the total weight of the light barrier element.

25. Method for producing a display device (10) comprising the steps of
a) providing a blank display device, wherein the blank display device comprises
at least one functional layer (14), and
at least one rear support layer (16),
wherein the functional layer (14) is next to the rear support layer (16),
wherein an upper surface (18) of the rear support layer (16) is opposite to a lower surface (20) of the rear support layer (16) and contacts a lower surface (22) of the functional layer (14),
wherein the functional layer (14) comprises at least two functional elements (28a, 28b), that are light-transmissive for visible light and are illuminable by at least one light source (30),
wherein the rear support layer (16) is light-transmissive for visible light,
b) producing at least one light barrier element (32) into the rear support layer (16) with a dye, such that the dye is molecularly solved in the material of the rear support layer and such that the light barrier element (32) extends essentially vertically from the lower surface (20) of the rear support layer (16) into the rear support layer (16) and is arranged between of at least two superposed functional elements (28a, 28b) of the superposed functional layer (14), and such that the light barrier element (32) arranged in the rear support layer (16) at least partly surrounds spaced apart at least one superposed functional element (28).

26. Method according to claim 25 wherein the blank display device in step a) is produced by film insert molding, in-mold decoration, in-mold labelling, lamination, over-molding, multi-material injection molding and/or a stacking process of the layers.

## Patentansprüche

1. Anzeigevorrichtung (10) mit beleuchtbaren Funktionselementen (28), mit:
mindestens einer Funktionsschicht (14);
mindestens einer hinteren Trägerschicht (16); und
mindestens einer Lichtbarriereschicht (32),
wobei die Funktionsschicht (14) benachbart zur hinteren Trägerschicht (16) angeordnet ist,
wobei eine obere Fläche (18) der hinteren Trägerschicht (16) gegenüberliegend einer unteren Fläche (20) der hinteren Trägerschicht (16) angeordnet ist und mit einer unteren Fläche (22) der Funktionsschicht (14) in Kontakt steht,
wobei die Funktionsschicht (14) mindestens zwei Funktionselemente (28a, 28b) aufweist, die für sichtbares Licht lichtdurchlässig sind und durch mindestens eine Lichtquelle (30) beleuchtbar sind,
wobei die hintere Trägerschicht (16) für sichtbares Licht lichtdurchlässig ist,
wobei die hintere Trägerschicht (16) mindestens ein Lichtbarriereelement (32) aufweist, wobei sich das Lichtbarriereelement (32) im Wesentlichen vertikal von der unteren Fläche (20) der hinteren Trägerschicht (16) in die hintere Trägerschicht (16) erstreckt und zwischen mindestens zwei Funktionselementen (28a, 28b) der überlagerten Funktionsschicht (14) angeordnet ist,
wobei das in der hinteren Trägerschicht (16) angeordnete Lichtbarriereelement (32) mindestens ein Funktionselement (28) in einem Abstand zumindest teilweise umgibt, und
wobei das Lichtbarriereelement (32) dazu eingerichtet ist, Lichtstreuung durch das Lichtbarriereelement (32) zu vermindern oder zu verhindern,
**dadurch gekennzeichnet, dass**
das Lichtbarriereelement (32) einen Farbstoff aufweist und in der hinteren Trägerschicht (16) ausgebildet ist, so dass der Farbstoff im Material der hinteren Trägerschicht molekular gelöst ist.

2. Anzeigevorrichtung (10) nach Anspruch 1, wobei die Anzeigevorrichtung (10) mindestens eine Vorderschicht (12) aufweist,
wobei die Funktionsschicht (14) zwischen der Vorderschicht (12) und der hinteren Trägerschicht (16) sandwichartig angeordnet ist, und
wobei eine obere Fläche (24) der Funktionsschicht (14) mit einer unteren Fläche (26) der Vorderschicht (12) in Kontakt steht.

3. Anzeigevorrichtung (10) nach Anspruch 1 oder 2, wobei die Anzeigevorrichtung (10) mindestens eine Lichtquelle (30) aufweist, wobei die Lichtquelle (30) unter der hinteren Trägerschicht (16) angeordnet ist und unter mindestens einem Funktionselement (28) angeordnet ist, so dass durch die Lichtquelle (30) emittiertes Licht das mindestens eine Funktionselement (28) im Wesentlichen beleuchtet, oder wobei die Anzeigevorrichtung (10) mindestens eine Lichtquelle (30) aufweist, wobei die Lichtquelle (30) über der Funktionsschicht (14) angeordnet ist, und/oder falls die Anzeigevorrichtung (10) eine Vorderschicht (12) aufweist, die Lichtquelle (30) über der Vorderschicht (12) angeordnet ist und über mindestens einem Funktionselement (28) angeordnet ist, so dass durch die Lichtquelle (30) emittiertes Licht das mindestens eine Funktionselement (28) im Wesentlichen beleuchtet.

4. Anzeigevorrichtung (10) nach einem der vorhergehenden Ansprüche, wobei das Lichtbarriereelement (32) weniger transluzent ist als die hintere Trägerschicht (16), und/oder das Lichtbarriereelement (32) im Vergleich zur hinteren Trägerschicht (16) mehr Licht bei einer Wellenlänge absorbiert, die im Wesentlichen einer Wellenlänge des durch die Lichtquelle (30) emittierten Lichts entspricht, und/oder das Lichtbarriereelement (32) im Vergleich zur hinteren Trägerschicht (16) mehr Licht bei einer Wellenlänge reflektiert, die im Wesentlichen einer Wellenlänge des durch die Lichtquelle (30) emittierten Lichts entspricht.

5. Anzeigevorrichtung (10) nach einem der vorhergehenden Ansprüche, wobei die Lichttransmission des Lichtbarriereelements (32) im Bereich von 380 nm bis 750 nm, bezogen auf die gleiche Pfadlänge, im Vergleich zur Lichttransmission der hinteren Trägerschicht (16) im Bereich von 380 nm bis 750 nm mindestens 2-mal, vorzugsweise mindestens 100-mal geringer ist.

6. Anzeigevorrichtung (10) nach einem der vorhergehenden Ansprüche, wobei die Anzeigevorrichtung (10) für jedes Funktionselement (28a, 28b) eine Lichtquelle (30a, 30b) aufweist.

7. Anzeigevorrichtung (10) nach einem der Ansprüche 3 bis 6, wobei die Lichtquelle (30) eine LED- oder eine OLED-Lichtquelle ist.

8. Anzeigevorrichtung (10) nach einem der Ansprüche 2 bis 7, wobei eine Dicke (40) der Vorderschicht (12) ≥ 25 µm bis ≤ 40000 µm, vorzugsweise ≥ 50 µm bis ≤ 10000 µm, bevorzugter ≥ 250 µm bis ≤ 500 µm beträgt.

9. Anzeigevorrichtung (10) nach einem der vorhergehenden Ansprüche, wobei eine Dicke (42) der Funktionsschicht (14) ≥ 1 µm bis ≤ 350 µm, vorzugsweise ≥ 5 µm bis ≤ 200 µm, bevorzugter ≥ 20 µm bis ≤ 100 µm beträgt.

10. Anzeigevorrichtung (10) nach einem der vorhergehenden Ansprüche, wobei eine Dicke (44) der hinteren Trägerschicht (16) ≥ 25 µm bis ≤ 40000 µm, vorzugsweise ≥ 50 µm bis ≤ 20000 µm, bevorzugter zwischen ≥ 500 µm bis ≤ 10000 µm beträgt.

11. Anzeigevorrichtung (10) nach einem der vorhergehenden Ansprüche, wobei eine vertikale Ausdehnung (46) des sich vertikal in die hintere Trägerschicht (16) erstreckenden Lichtbarriereelements (32) zwischen 0,0025% und 100% der Dicke der hinteren Trägerschicht (16) und/oder ≥ 1 µm, vorzugsweise ≥ 100 µm und bevorzugter ≥ 250 µm beträgt.

12. Anzeigevorrichtung (10) nach einem der vorhergehenden Ansprüche, wobei eine Dicke (48) des Lichtbarriereelements (32) in der hinteren Trägerschicht (16) ≥ 1 µm bis ≤ 10000 µm, vorzugsweise ≥ 10 µm bis ≤ 5000 µm, bevorzugter zwischen ≥ 50 µm und ≤ 1000 µm beträgt.

13. Anzeigevorrichtung (10) nach einem der vorhergehenden Ansprüche, wobei die Anzeigevorrichtung (10) ein Vorsprungelement (34) aufweist, wobei das Vorsprungelement (34) sich aus der unteren Fläche (20) der hinteren Trägerschicht (16) heraus erstreckt und zwischen mindestens zwei Funktionselementen (28a, 28b) der überlagerten Funktionsschicht (14) angeordnet ist.

14. Anzeigevorrichtung (10) nach einem der Ansprüche 2 bis 13, wobei die Vorderschicht (12) ein Vorderschicht-Trägerschicht-Polymer oder Mischungen davon aufweist, das/die ausgewählt ist/sind aus der Gruppe bestehend aus Polycarbonat (PC), Polyethylenterephthalat (PET), Polyethylennaphthalat (PEN), Polyethylenfuranoat (PEF), glykolisiertem oder amorphem Polyester, glykolisiertem oder amorphem Polyethylenterephthalat (PET-G oder A-PET), Polytrimethylenterephthalat (PTT), Polybutylenterephthalat (PBT), Poly(methylmethacrylat) (PMMA), Polypropylen (PP), Polyvinylchlorid (PVC), Cellulosetriacetat (TCA), Polyamid (PA), Polyimid (PI) oder Polyethylen (PE), Polyoxymethylen (POM), Polystyrol (PS), Polyurethan (PU), Silikon und Acrylnitril-Butadien-Styrol (ABS).

15. Anzeigevorrichtung (10) nach einem der vorhergehenden Ansprüche, wobei die Anzeigevorrichtung (10) eine kratzfeste Beschichtung (36) auf einer oberen Fläche (38) der Vorderschicht (12), auf einer oberen Fläche der Funktionsschicht oder auf der unteren Fläche (20) der hinteren Trägerschicht (16) aufweist.

16. Anzeigevorrichtung (10) nach Anspruch 15, wobei die kratzfeste Beschichtung (36) ein Polymer oder Mischungen davon aufweist, das/die ausgewählt ist/sind aus der Gruppe bestehend aus Acrylharz, Epoxidharzen und Polyurethan.

17. Anzeigevorrichtung (10) nach einem der vorhergehenden Ansprüche, wobei das Lichtbarriereelement (32) und die hintere Trägerschicht (16) eine einteilige Komponente sind.

18. Anzeigevorrichtung (10) nach einem der vorhergehenden Ansprüche, wobei das Lichtbarriereelement (32) und die hintere Trägerschicht (16) aus dem gleichen Material bestehen, mit der Ausnahme, dass das Lichtbarriereelement (32) zusätzlich den Farbstoff aufweist, so dass die Lichtdurchlässigkeit des Lichtbarriereelements (32) für Licht mit einer Wellenlänge von 380 nm bis 750 nm geringer ist als die Lichtdurchlässigkeit der hinteren Trägerschicht (16) für Licht mit einer Wellenlänge von 380 nm bis 750 nm.

19. Anzeigevorrichtung (10) nach einem der vorhergehenden Ansprüche, wobei das Lichtbarriereelement (32) und/oder die hintere Trägerschicht (16) auf einem Material der hinteren Trägerschicht basiert, wobei das Material der hinteren Trägerschicht ein Vorderschicht-Trägerschicht-Polymer oder Mischungen davon aufweist, das/die ausgewählt ist/sind aus der Gruppe bestehend aus Polycarbonat (PC), Polyethylenterephthalat (PET), Polyethylennaphthalat (PEN), Polyethylenfuranoat (PEF), glykolisiertem oder amorphem Polyester, glykolisiertem oder amorphem Polyethylenterephthalat (PET-G oder A-PET), Polytrimethylenterephthalat (PTT), Polybutylenterephthalat (PBT), Poly(methylmethacrylat) (PMMA), Polypropylen (PP), Polyvinylchlorid (PVC), Cellulosetriacetat (TCA), Polyamid (PA), Polyimid (PI) oder Polyethylen (PE), Polyoxymethylen (POM), Polystyrol (PS), Polyurethan (PU), Silikon und Acrylnitril-Butadien-Styrol (ABS).

20. Anzeigevorrichtung (10) nach einem der vorhergehenden Ansprüche, wobei die Funktionsschicht und/oder die Funktionselemente auf einem Funktionsschichtmaterial basieren, wobei das Funktionsschichtmaterial einen Farbstoff oder Mischungen davon aufweist.

21. Anzeigevorrichtung (10) nach Anspruch 19, wobei
das Material der hinteren Trägerschicht mindestens 0,5 Gew.-% eines Vorderschicht-Trägerschicht-Polymers, das mindestens 5 Gew.-% Heteroatome, bezogen auf das Molekulargewicht des Vorderschicht-Trägerschicht-Polymers, oder Mischungen davon aufweist, wobei Heteroatome beliebige Atome mit Ausnahme von C und H-Atomen sind, oder
das Material der hinteren Trägerschicht auf einer Mischung basiert, die ≥ 0,5 Gew.-% einer polaren Verbindung oder Mischungen davon und < 99,5 Gew.-% des Vorderschicht-Trägerschicht-Polymers oder Mischungen davon aufweist, und wobei die polare Verbindung mindestens 5 Gew.-% Heteroatome, bezogen auf das Molekulargewicht der polaren Verbindung, aufweist, wobei Heteroatome beliebige Atome mit Ausnahme von C- und H-Atomen sind.

22. Anzeigevorrichtung (10) nach einem der vorhergehenden Ansprüche, wobei das Lichtbarriereelement (32) den Farbstoff und mindestens 0,5 Gew.-% eines Vorderschicht-Trägerschicht-Polymers, das mindestens 5 Gew.-% Heteroatome, bezogen auf das Molekulargewicht des Vorderschicht-Trägerschicht-Polymers, oder Mischungen davon aufweist, wobei Heteroatome beliebige Atome mit Ausnahme von C- und H-Atomen sind, oder
das Lichtbarriereelement (32) den Farbstoff aufweist und auf einer Mischung basiert, die 0,5 Gew.-% einer polaren Verbindung oder Mischungen davon und < 99,5 Gew.-% des Vorderschicht-Trägerschicht-Polymers oder Mischungen davon aufweist, und wobei die polare Verbindung mindestens 5 Gew.-% Heteroatome, bezogen auf das Molekulargewicht der polaren Verbindung, aufweist, wobei Heteroatome beliebige Atome mit Ausnahme von C- und H-Atomen sind.

23. Anzeigevorrichtung (10) nach einem der vorhergehenden Ansprüche, wobei das Lichtbarriereelement (32) den Farbstoff mit einem Molekulargewicht im Bereich von etwa ≥ 250 g/mol bis etwa ≤ 550 g/mol aufweist.

24. Anzeigevorrichtung (10) nach einem der vorhergehenden Ansprüche, wobei das Lichtbarriereelement (32) den Farbstoff in einer Konzentration von etwa ≥ 0,0001 Gew.-% bis ≤ 5 Gew.-%, bezogen auf das Gesamtgewicht des Lichtbarriereelements, aufweist.

25. Verfahren zum Herstellen einer Anzeigevorrichtung (10) mit den Schritten:
a) Bereitstellen eines Anzeigevorrichtungs-Vorprodukts, wobei das Anzeigevorrichtungs-Vorprodukt aufweist:
mindestens eine Funktionsschicht (14); und
mindestens eine hintere Trägerschicht (16),
wobei die Funktionsschicht (14) der hinteren Trägerschicht (16) benachbart ist,
wobei eine obere Fläche (18) der hinteren Trägerschicht (16) einer unteren Fläche (20) der hinteren Trägerschicht (16) gegenüberliegt und mit einer unteren Fläche (22) der Funktionsschicht (14) in Kontakt steht,
wobei die Funktionsschicht (14) mindestens zwei Funktionselemente (28a, 28b) aufweist, die für sichtbares Licht lichtdurchlässig sind und durch mindestens eine Lichtquelle (30) beleuchtbar sind,
wobei die hintere Trägerschicht (16) für sichtbares Licht lichtdurchlässig ist; und
b) Erzeugen mindestens eines Lichtbarriereelements (32) in der hinteren Trägerschicht (16) durch einen Farbstoff, so dass der Farbstoff im Material der hinteren Trägerschicht molekular gelöst ist, und so, dass das Lichtbarriereelement (32) sich im Wesentlichen senkrecht von der unteren Fläche (20) der hinteren Trägerschicht (16) in die hintere Trägerschicht (16) erstreckt und zwischen mindestens zwei Funktionselementen (28a, 28b) der überlagerten Funktionsschicht (14) angeordnet ist, und so, dass das in der hinteren Trägerschicht (16) angeordnete Lichtbarriereelement (32) ein Funktionselement (28) zumindest teilweise in einem Abstand umgibt.

26. Verfahren nach Anspruch 25, wobei das Anzeigevorrichtungs-Vorprodukt in Schritt a) durch Film-Insert-Molding, In-Mold-Decoration, In-Mold-Labeling, Laminieren, Überspritzen, Multimaterial-Spritzgießen und/oder einen Schichtstapelungsprozess hergestellt wird.

## Revendications

1. Dispositif d'affichage (10) avec des éléments fonctionnels pouvant être illuminés (28), comprenant :
au moins une couche fonctionnelle (14),
au moins une couche de support arrière (16), et
au moins un élément de barrière à la lumière (32),
dans lequel la couche fonctionnelle (14) est à côté de la couche de support arrière (16),
dans lequel une surface supérieure (18) de la couche de support arrière (16) est opposée à une surface inférieure (20) de la couche de support arrière (16) et est en contact avec une surface inférieure (22) de la couche fonctionnelle (14),
dans lequel la couche fonctionnelle (14) comprend au moins deux éléments fonctionnels (28a, 28b), qui transmettent la lumière visible et peuvent être illuminés par au moins une source de lumière (30),
dans lequel la couche de support arrière (16) transmet la lumière visible,
dans lequel la couche de support arrière (16) comprend au moins un élément de barrière à la lumière (32),
dans lequel l'élément de barrière à la lumière (32) s'étend essentiellement verticalement depuis la surface inférieure (20) de la couche de support arrière (16) dans la couche de support arrière (16) et est agencé entre au moins deux éléments fonctionnels superposés (28a, 28b) de la couche fonctionnelle superposée (14),
dans lequel l'élément de barrière à la lumière (32) agencé dans la couche de support arrière (16) entoure à distance au moins partiellement au moins un élément fonctionnel superposé (28), et
dans lequel l'élément de barrière à la lumière (32) est adapté pour réduire ou prévenir la diffusion de la lumière à travers l'élément de barrière à la lumière (32), **caractérisé en ce que** l'élément de barrière à la lumière (32) comprend un colorant et est formé dans la couche de support arrière (16), de telle sorte que le colorant est moléculairement dispersé dans le matériau de la couche de support arrière.

2. Dispositif d'affichage (10) selon la revendication 1, dans lequel le dispositif d'affichage (16) comprend au moins une couche avant (12),
dans lequel la couche fonctionnelle (14) est prise en sandwich entre la couche avant (12) et la couche de support arrière (16), et
dans lequel une surface supérieure (24) de la couche fonctionnelle (14) est en contact avec une surface inférieure (26) de la couche avant (12).

3. Dispositif d'affichage (10) selon la revendication 1 ou 2, dans lequel le dispositif d'affichage (10) comprend au moins une source de lumière (30), dans lequel la source de lumière (30) est agencée sous la couche de support arrière (16) et est positionnée sous au moins un élément fonctionnel (28), de telle sorte que la lumière émise par la source de lumière (30) illumine substantiellement ledit au moins un élément fonctionnel (28) ou dans lequel le dispositif d'affichage (10) comprend au moins une source de lumière (30), dans lequel la source de lumière (30) est agencée au-dessus de la couche fonctionnelle (14), et/ou dans le cas où le dispositif d'affichage (10) comprend une couche avant (12) au-dessus de la couche avant (12), et est positionnée au-dessus au moins un élément fonctionnel (28), de telle sorte que la lumière émise par la source de lumière (30) illumine substantiellement ledit au moins un élément fonctionnel (28).

4. Dispositif d'affichage (10) selon l'une quelconque des revendications précédentes, dans lequel l'élément de barrière à la lumière (32) est moins translucide que la couche de support arrière (16), et/ou l'élément de barrière à la lumière (32) absorbe plus de lumière à une longueur d'onde qui correspond essentiellement à une longueur d'onde de la lumière émise par la source de lumière (30) par comparaison avec la couche de support arrière (16), et/ou l'élément de barrière à la lumière (32) reflète plus de lumière à une longueur d'onde qui correspond essentiellement à une longueur d'onde de la lumière émise par la source de lumière (30) par comparaison avec la couche de support arrière (16).

5. Dispositif d'affichage (10) selon l'une quelconque des revendications précédentes, dans lequel la transmission de la lumière dans une plage de 380 nm à 750 nm de l'élément de barrière à la lumière (32) est au moins deux fois, préférentiellement au moins 100 fois, plus petit par comparaison avec la transmission de la lumière dans une plage de 380 nm à 750 nm de la couche de support arrière (16), basé sur la même longueur de trajet.

6. Dispositif d'affichage (10) selon l'une quelconque des revendications précédentes, dans lequel le dispositif d'affichage (10) comprend une source de lumière (30a, 30b) pour chaque élément fonctionnel (28a, 28b).

7. Dispositif d'affichage (10) selon l'une quelconque des revendications 3 à 6, dans lequel la source de lumière (30) est une source de lumière de type LED ou OLED.

8. Dispositif d'affichage (10) selon l'une quelconque des revendications 2 à 7, dans lequel une épaisseur (40) de la couche avant (12) est de ≥ 25 µm à ≤ 40000 µm, préférentiellement de ≥ 50 µm à ≤ 10000 µm, plus préférentiellement de ≥ 250 µm à ≤ 500 µm.

9. Dispositif d'affichage (10) selon l'une quelconque des revendications précédentes, dans lequel une épaisseur (42) de la couche fonctionnelle (14) est de ≥ 1 µm à ≤ 350 µm, préférentiellement de ≥ 5 µm à ≤ 200 µm, plus préférentiellement de ≥ 20 µm à ≤ 100 µm.

10. Dispositif d'affichage (10) selon l'une quelconque des revendications précédentes, dans lequel une épaisseur (44) de la couche de support arrière (16) est de ≥ 25 µm à ≤ 40000 µm, préférentiellement de ≥ 50 µm à ≤ 20000 µm, plus préférentiellement de ≥ 500 µm à ≤ 10000 µm.

11. Dispositif d'affichage (10) selon l'une quelconque des revendications précédentes, dans lequel une extension verticale (46) de l'élément de barrière à la lumière (32) s'étendant verticalement dans la couche de support arrière (16) est entre 0,0025% et 100 % de l'épaisseur de la couche de support arrière (16), et/ou ≥ 1 µm, préférentiellement ≥ 100 µm, et plus préférentiellement ≥ 250 µm.

12. Dispositif d'affichage (10) selon l'une quelconque des revendications précédentes, dans lequel une épaisseur (48) de l'élément de barrière à la lumière (32) dans la couche de support arrière (16) est de ≥ 1 µm à ≤ 10000 µm, préférentiellement de ≥ 10 µm à ≤ 5000 µm, plus préférentiellement de ≥ 50 µm à ≤ 1000 µm.

13. Dispositif d'affichage (10) selon l'une quelconque des revendications précédentes, dans lequel le dispositif d'affichage (10) comprend un élément saillant (34), dans lequel l'élément saillant (34) s'étend à l'extérieur de la surface inférieure (20) de la couche de support arrière (16) et est agencée entre au moins deux éléments fonctionnels superposés (28a, 28b) de la couche fonctionnelle superposée (14).

14. Dispositif d'affichage (10) selon l'une quelconque des revendications 2 à 13, dans lequel la couche avant (12) comprend un polymère couche-avant-couche-support ou mélanges de celui-ci sélectionnés parmi le groupe comprenant polycarbonate (PC), polytéréphtalate d'éthylène (PET), polynaphtalate d'éthylène (PEN), polyfuranoate d'éthylène (PEF), polyester glycolisé ou amorphe, polytéréphtalate d'éthylène glycolisé ou amorphe (PET-G ou A-PET), polytéréphtalate de triméthylène (PTT), polytéréphtalate de butylène (PBT), polyméthacrylate de méthyle (PMMA), polypropylène (PP), polychlorure de vinyle (PVC), triacétate de cellulose (TCA), polyamide (PA), polyimide (PI) ou polyethylène (PE), polyoxyméthylène (POM), polystyrène (PS), polyuréthane (PU), silicone et acrylonitrile butadiène styrène (ABS).

15. Dispositif d'affichage (10) selon l'une quelconque des revendications précédentes, dans lequel le dispositif d'affichage (10) comprend une couche anti-rayure (36) sur une surface supérieure (38) de la couche avant (12), sur une surface supérieure de la couche fonctionnelle ou sur la surface inférieure (20) de la couche de support arrière (16).

16. Dispositif d'affichage (10) selon la revendication 15, dans lequel la couche anti-rayure (36) comprend un polymère de couche anti-rayure ou mélanges de celui-ci sélectionnés dans le groupe comprenant résine acrylique, résines époxy, et polyuréthane.

17. Dispositif d'affichage (10) selon l'une quelconque des revendications précédentes, dans lequel l'élément de barrière à la lumière (32) et la couche de support arrière (16) sont un composant d'un seul tenant.

18. Dispositif d'affichage (10) selon l'une quelconque des revendications précédentes, dans lequel l'élément de barrière à la lumière (32) et la couche de support arrière (16) sont constitués du même matériau, à l'exception que l'élément de barrière à la lumière (32) comprend en outre le colorant, de sorte que la transmittance de l'élément de barrière à la lumière (32) pour une lumière ayant une longueur d'onde de 380 nm à 750 nm est inférieure à la transmittance de la couche de support arrière (16) pour une lumière ayant une longueur d'onde de 380 nm à 750 nm.

19. Dispositif d'affichage (10) selon l'une quelconque des revendications précédentes, dans lequel l'élément de barrière à la lumière (32) et/ou la couche de support arrière (16) sont basés sur un matériau de couche de support arrière, dans lequel le matériau de couche de support arrière comprend un polymère couche-avant-couche-support ou mélanges de celui-ci sélectionnés parmi le groupe comprenant polycarbonate (PC), polytéréphtalate d'éthylène (PET), polynaphtalate d'éthylène (PEN), polyfuranoate d'éthylène (PEF), polyester glycolisé ou amorphe, polytéréphtalate d'éthylène glycolisé ou amorphe (PET-G ou A-PET), polytéréphtalate de triméthylène (PTT), polytéréphtalate de butylène (PBT), polyméthacrylate de méthyle (PMMA), polypropylène (PP), polychlorure de vinyle (PVC), triacétate de cellulose (TCA), polyamide (PA), polyimide (PI) ou polyethylène (PE), polyoxyméthylène (POM), polystyrène (PS), polyuréthane (PU), silicone et acrylonitrile butadiène styrène (ABS).

20. Dispositif d'affichage (10) selon l'une quelconque des revendications précédentes, dans lequel la couche fonctionnelle et/ou les éléments fonctionnels sont basés sur un matériau de couche fonctionnelle, dans lequel le matériau de couche fonctionnelle comprend un agent colorant ou mélanges de ceux-ci.

21. Dispositif d'affichage (10) selon la revendication 19, dans lequel le matériau de couche de support arrière comprend au moins 0,5 pds% d'un polymère couche-avant-couche-support qui a au moins 5 pds% d'hétéroatomes basé sur le poids moléculaire du polymère couche-avant-couche-support ou mélanges de celui-ci, dans lequel les hétéroatomes sont n'importe quels atomes exceptés des atomes C et H,
ou
le matériau de couche de support arrière basé sur un mélange comprenant ≥ 0,5 pds% d'un composé polaire ou mélanges de celui-ci et < 99,5 pds% du polymère couche-avant-couche-support ou mélanges de celui-ci, et dans lequel le composé polaire a au moins 5 pds% d'hétéroatomes basé sur le poids moléculaire du composé polaire, dans lequel les hétéroatomes sont n'importe quels atomes exceptés des atomes C et H.

22. Dispositif d'affichage (10) selon l'une quelconque des revendications précédentes, dans lequel l'élément de barrière à la lumière (32) comprend le colorant et au moins 0,5 pds% d'un polymère couche-avant-couche-support qui a au moins 5 pds% d'hétéroatomes basé sur le poids moléculaire du polymère couche-avant-couche-support ou de mélanges de celui-ci, dans lequel les hétéroatomes sont n'importe quels atomes exceptés des atomes C et H, ou
l'élément de barrière à la lumière (32) comprend le colorant et est basé sur un mélange comprenant ≥ 0,5 pds% d'un composé polaire ou mélanges de celui-ci et < 99,5 pds% du polymère couche-avant-couche-support ou mélanges de celui-ci, et dans lequel le composé polaire a au moins 5 pds% d'hétéroatomes basé sur le poids moléculaire du composé polaire, dans lequel les hétéroatomes sont n'importe quels atomes exceptés des atomes C et H.

23. Dispositif d'affichage (10) selon l'une quelconque des revendications précédentes, dans lequel l'élément de barrière à la lumière (32) comprend le colorant ayant un poids moléculaire dans une plage d'environ ≥ 250 g/mol à environ ≤ 550 g/mol.

24. Dispositif d'affichage (10) selon l'une quelconque des revendications précédentes, dans lequel l'élément de barrière à la lumière (32) comprend le colorant dans une concentration d'environ ≥ 0,0001 pds% à ≤ 5 pds%, basé sur le poids total de l'élément de barrière à la lumière.

25. Procédé de fabrication d'un dispositif d'affichage (10) comprenant les étapes de
a) la fourniture d'un dispositif d'affichage vierge, dans lequel le dispositif d'affichage vierge comprend
au moins une couche fonctionnelle (14), et
au moins une couche de support arrière (16),
dans laquelle la couche fonctionnelle (14) est à côté de la couche de support arrière (16),
dans laquelle une surface supérieure (18) de la couche de support arrière (16) est opposée à une surface inférieure (20) de la couche de support arrière (16) et est en contact avec une surface inférieure (22) de la couche fonctionnelle (14),
dans laquelle la couche fonctionnelle (14) comprend au moins deux éléments fonctionnels (28a, 28b), qui transmettent la lumière visible et peuvent être illuminés par au moins une source de lumière (30),
dans laquelle la couche de support arrière (16) transmet la lumière visible.
b) la production d'au moins un élément de barrière à la lumière (32) dans la couche de support arrière (16) avec un colorant, de telle sorte que le colorant est moléculairement dispersé dans le matériau de la couche de support arrière et de telle sorte que l'élément de barrière à la lumière (32) s'étend essentiellement verticalement depuis la surface inférieure (20) de la couche de support arrière (16) dans la couche de support arrière (16) et est agencé entre deux éléments fonctionnels superposés (28a, 28b) de la couche fonctionnelle superposée (14), et de telle sorte que l'élément de barrière à la lumière (32) agencé dans la couche de support arrière (16) entoure à distance au moins partiellement au moins un élément fonctionnel superposé (28).

26. Procédé selon la revendication 25, dans lequel le dispositif d'affichage vierge dans l'étape a) est fabriqué par moulage par insertion de film, décoration dans le moule, étiquetage dans le moule, laminage, surmoulage, moulage par injection à plusieurs composants, et/ou un procédé d'empilement des couches.
